# EUROPEAN PATENT APPLICATION

(11) **EP 4 770 047 A1**
(43) Date of publication of application: **01.07.2026**
(21) Application number: 25772971.5
(22) Date of filing: 12.03.2025
(51) Int. Cl.: H04L 65/65, G06T 11/00, G06Q 30/02

(54) **MULTIMEDIA DATA SENDING METHOD, TERMINAL, AND SERVER**

(30) Priority: 21.03.2024 CN 202410332849
(71) Applicant: HUAWEI TECHNOLOGIES CO., LTD., Shenzhen 518129 (CN)
(72) Inventor: WANG, Yue, Shenzhen, Guangdong 518129 (CN); CHAI, Shangling, Shenzhen, Guangdong 518129 (CN)
(74) Representative: Maiwald GmbH
(86) International application number: PCT/CN2025/082165
(87) International publication number: WO 2025/195263

(57) **Abstract**

This application is applicable to the field of data processing technologies, and provides a multimedia data sending method, a terminal, and a server. The method includes: generating, in response to a layout setting operation initiated by a user and based on a setting parameter corresponding to the layout setting operation, first layout information corresponding to first multimedia data specified by the user, where the first layout information is used to determine a first area in the first multimedia data; and generating, based on the first layout information, at least one piece of second multimedia data that includes the first area. In the technical solutions provided in this application, a first area that needs to be retained by a user can be accurately determined, to generate derived area data that retains area data of the first area in original multimedia data, thereby improving accuracy of generating the derived area data, and improving efficiency of generating the derived area data in batches.

## Description

This application claims priority to Chinese Patent Application No. 202410332849.2, filed with the China National Intellectual Property Administration on March 21, 2024 and entitled "MULTIMEDIA DATA SENDING METHOD, TERMINAL, AND SERVER", which is incorporated herein by reference in its entirety.

### TECHNICAL FIELD

This application relates to the field of data processing technologies, and in particular, to a multimedia data sending method, a terminal, and a server.

### BACKGROUND

Multimedia, as a main carrier of present content presentation, is widely used in various fields. How to efficiently and accurately generate multimedia data required by a user becomes an attention focus of people. In an existing multimedia technology, multimedia data that needs to be published by a user, such as an image or a video, may be imported into a preset template, so that a plurality of pieces of derived area data that are consistent with a layout structure of the template can be generated in batches. It may be determined that the template includes a fixed retained area and a fixed adjusted area.

However, because content that needs to be retained in different fields is different, when derived area data is generated in the foregoing manner, content that needs to be retained by the user in original multimedia data may fail to be retained, which diminishes accuracy of generating the derived area data.

### SUMMARY

Embodiments of this application provide a multimedia data sending method, a terminal, and a server, to resolve a problem in an existing multimedia technology that generating derived area data in different fields by using a same template easily results in a failure to retain content that needs to be retained by a user, which diminishes accuracy of generating the derived area data.

According to a first aspect, an embodiment of this application provides a multimedia data generation method, applied to a terminal. The multimedia data generation method includes:
generating, in response to a layout setting operation initiated by a user and based on a setting parameter corresponding to the layout setting operation, first layout information corresponding to first multimedia data specified by the user, where the first layout information is used to determine a first area in the first multimedia data; and
generating, based on the first layout information, at least one piece of second multimedia data that includes the first area.

Implementation of this embodiment of this application has the following beneficial effects: The first layout information corresponding to the first multimedia data is generated based on the layout setting operation of the user, and then when derived area data corresponding to the first multimedia data is generated, in other words, when the second multimedia data is generated, area data of the first area in the first multimedia data is retained based on the first layout information, to obtain the second multimedia data including the area data of the first area, thereby generating the derived area data in a personalized manner. Compared with an existing multimedia technology, in the multimedia data generation method provided in this embodiment of this application, data derivation is not performed on all multimedia data by using a same template, but corresponding first layout information may be determined in a personalized manner based on a setting operation of a user and original multimedia data specified by the user, to accurately determine a first area that needs to be retained by the user, and generate derived area data that retains area data of the first area in the original multimedia data, thereby improving accuracy of generating the derived area data, and improving efficiency of generating the derived area data in batches.

In a possible implementation of the first aspect, the first layout information is further used to determine a second area in the first multimedia data, and the generating, based on the first layout information, the at least one piece of second multimedia data that includes the first area includes:
generating at least one piece of derived area data associated with the second area; and
generating the second multimedia data based on first area data of the first area and the derived area data.

In a possible implementation of the first aspect, the setting parameter includes a derivation quantity N, and the generating the at least one piece of derived area data associated with the second area includes:
generating N pieces of derived area data associated with the second area; and
the generating the second multimedia data based on the first area data of the first area and the derived area data includes:
generating N pieces of second multimedia data based on the N pieces of derived area data and the first area data.

In a possible implementation of the first aspect, the setting parameter includes an association indicator, and the generating the at least one piece of derived area data associated with the second area includes:
performing semantic recognition on second area data of the second area, to obtain semantic description information of the second area; and
generating the at least one piece of derived area data based on the association indicator and the semantic description information.

In a possible implementation of the first aspect, the setting parameter includes a target size, and the generating, based on the first layout information, the at least one piece of second multimedia data that includes the first area includes:
generating, based on the first layout information, the at least one piece of second multimedia data that matches the target size.

In a possible implementation of the first aspect, the generating, in response to the layout setting operation initiated by the user and based on the setting parameter corresponding to the layout setting operation, the first layout information corresponding to the first multimedia data specified by the user includes:
determining, in the first multimedia data based on an industry type corresponding to the first multimedia data, at least one first area corresponding to the industry type; and
generating the first layout information based on the at least one first area.

In a possible implementation of the first aspect, before the determining, in the first multimedia data based on the industry type corresponding to the first multimedia data, the at least one first area corresponding to the industry type, the method includes:
in response to the layout setting operation, determining the industry type corresponding to the first multimedia data.

In a possible implementation of the first aspect, after the generating, in response to the layout setting operation initiated by the user and based on the setting parameter corresponding to the layout setting operation, the first layout information corresponding to the first multimedia data specified by the user, the method further includes:
in response to an adjustment operation initiated by the user based on the first layout information, performing layout adjustment on the first layout information, to generate second layout information; and
generating, based on the second layout information, the at least one piece of second multimedia data that includes the first area.

In a possible implementation of the first aspect, the generating, in response to the layout setting operation initiated by the user and based on the setting parameter corresponding to the layout setting operation, the first layout information corresponding to the first multimedia data specified by the user includes:
in response to the layout setting operation initiated by the user, sending a setting data packet to a server, where the setting data packet includes the setting parameter and the first multimedia data; and
receiving the first layout information fed back by the server.

In a possible implementation of the first aspect, the generating, based on the first layout information, the at least one piece of second multimedia data that includes the first area includes:
sending layout confirmation information about the first layout information to a server, where the layout confirmation information includes the first layout information or the second layout information obtained by adjusting the first layout information; and
receiving the at least one piece of second multimedia data generated by the server based on the layout confirmation information and the setting parameter.

According to a second aspect, an embodiment of this application provides a multimedia data generation apparatus, applied to a terminal. The generation apparatus includes:
a layout setting unit, configured to generate, in response to a layout setting operation initiated by a user and based on a setting parameter corresponding to the layout setting operation, first layout information corresponding to first multimedia data specified by the user, where the first layout information is used to determine a first area in the first multimedia data; and
a derivation unit, configured to generate, based on the first layout information, at least one piece of second multimedia data that includes the first area.

In a possible implementation of the second aspect, the derivation unit includes:
a derived area generation unit, configured to generate at least one piece of derived area data associated with the second area; and
a derived area merging unit, configured to generate the second multimedia data based on first area data of the first area and the derived area data.

In a possible implementation of the second aspect, the setting parameter includes a derivation quantity N, and the derived area generation unit is specifically configured to generate N pieces of derived area data associated with the second area.

The derived area merging unit is specifically configured to generate N pieces of second multimedia data based on the N pieces of derived area data and the first area data.

In a possible implementation of the second aspect, the setting parameter includes an association indicator, and the derived area generation unit includes:
a semantic description determining unit, configured to perform semantic recognition on second area data of the second area, to obtain semantic description information of the second area; and
a semantic derivation unit, configured to generate the at least one piece of derived area data based on the association indicator and the semantic description information.

In a possible implementation of the second aspect, the setting parameter includes a target size, and the derivation unit includes:
a size adjustment unit, configured to generate, based on the first layout information, the at least one piece of second multimedia data that matches the target size.
   In a possible implementation of the second aspect, the layout setting unit includes:
an industry type determining unit, configured to determine, in the first multimedia data based on an industry type corresponding to the first multimedia data, at least one first area corresponding to the industry type; and
a first area generation unit, configured to generate the first layout information based on the at least one first area.

In a possible implementation of the second aspect, the generation apparatus further includes:
an industry type setting unit, configured to: in response to the layout setting operation, determine the industry type corresponding to the first multimedia data.

In a possible implementation of the second aspect, the generation apparatus further includes:
a layout adjustment unit, configured to: in response to an adjustment operation initiated by the user based on the first layout information, perform layout adjustment on the first layout information, to generate second layout information; and
a second layout generation unit, configured to generate, based on the second layout information, the at least one piece of second multimedia data that includes the first area.

In a possible implementation of the second aspect, the layout setting unit includes:
a setting data packet sending unit, configured to: in response to the layout setting operation initiated by the user, send a setting data packet to a server, where the setting data packet includes the setting parameter and the first multimedia data; and
a first layout information receiving unit, configured to receive the first layout information fed back by the server.

In a possible implementation of the second aspect, the derivation unit includes:
a layout confirmation information sending unit, configured to send layout confirmation information about the first layout information to a server, where the layout confirmation information includes the first layout information or the second layout information obtained by adjusting the first layout information; and
a second layout derivation unit, configured to receive the at least one piece of second multimedia data generated by the server based on the layout confirmation information and the setting parameter.

According to a third aspect, an embodiment of this application provides a multimedia data generation method, applied to a server. The multimedia data generation method includes:
receiving a setting data packet sent by a terminal, where the setting data packet includes first multimedia data and a setting parameter that is determined based on a layout setting operation of a user;
determining, based on the setting data packet, layout confirmation information corresponding to the first multimedia data, where the layout confirmation information is used to determine a first area in the first multimedia data; and
generating, based on the layout confirmation information and the setting parameter, at least one piece of second multimedia data that includes the first area.

In a possible implementation of the third aspect, the layout confirmation information includes first layout information;
the determining, based on the setting data packet, the layout confirmation information corresponding to the first multimedia data includes:
generating, based on the setting data packet, the first layout information corresponding to the first multimedia data; and
sending the first layout information to the terminal; and
the generating, based on the layout confirmation information and the setting parameter, the at least one piece of second multimedia data that includes the first area includes:
in response to a confirmation instruction sent by the terminal, generating the at least one piece of second multimedia data based on the first layout information and the setting parameter.

In a possible implementation of the third aspect, the layout confirmation information includes second layout information;
after the sending the first layout information to the terminal, the method further includes:
in response to an adjustment instruction sent by the terminal, performing layout adjustment on the first layout information based on the adjustment instruction, to obtain the second layout information;
the generating, based on the layout confirmation information and the setting parameter, the at least one piece of second multimedia data that includes the first area includes:
generating the at least one piece of second multimedia data based on the second layout information and the setting parameter.

In a possible implementation of the third aspect, the layout confirmation information is further used to determine a second area in the first multimedia data, and the generating, based on the layout confirmation information and the setting parameter, the at least one piece of second multimedia data that includes the first area includes:
generating at least one piece of derived area data associated with the second area; and
generating the second multimedia data based on first area data of the first area and the derived area data.

In a possible implementation of the third aspect, the setting parameter includes a derivation quantity N, and the generating the at least one piece of derived area data associated with the second area includes:
generating N pieces of derived area data associated with the second area; and
the generating the second multimedia data based on the first area data of the first area and the derived area data includes:
generating N pieces of second multimedia data based on the N pieces of derived area data and the first area data.

In a possible implementation of the third aspect, the setting parameter includes an association indicator, and the generating the at least one piece of derived area data associated with the second area includes:
performing semantic recognition on second area data of the second area, to obtain semantic description information of the second area; and
generating the at least one piece of derived area data based on the association indicator and the semantic description information.

In a possible implementation of the third aspect, the setting parameter includes a target size, and the generating, based on the layout confirmation information and the setting parameter, the at least one piece of second multimedia data that includes the first area includes:
generating, based on the layout confirmation information, the at least one piece of second multimedia data that matches the target size.

In a possible implementation of the third aspect, the setting parameter includes an industry type corresponding to the first multimedia data, and the determining, based on the setting data packet, the layout confirmation information corresponding to the first multimedia data includes:
determining, in the first multimedia data based on the industry type corresponding to the first multimedia data, at least one first area corresponding to the industry type; and
obtaining the layout confirmation information based on the at least one first area.

According to a fourth aspect, an embodiment of this application provides a multimedia data generation apparatus, applied to a server. The multimedia data generation apparatus includes:
a setting receiving unit, configured to receive a setting data packet sent by a terminal, where the setting data packet includes first multimedia data and a setting parameter that is determined based on a layout setting operation of a user;
a layout confirmation unit, configured to determine, based on the setting data packet, layout confirmation information corresponding to the first multimedia data, where the layout confirmation information is used to determine a first area in the first multimedia data; and
a derived data generation unit, configured to generate, based on the layout confirmation information and the setting parameter, at least one piece of second multimedia data that includes the first area.

In a possible implementation of the fourth aspect, the layout confirmation information includes first layout information;
the layout confirmation unit includes:
a first layout information determining unit, configured to generate, based on the setting data packet, the first layout information corresponding to the first multimedia data; and
a first layout information sending unit, configured to send the first layout information to the terminal; and
the derived data generation unit includes:
   a first derived data generation unit, configured to: in response to a confirmation instruction sent by the terminal, generate the at least one piece of second multimedia data based on the first layout information and the setting parameter.

In a possible implementation of the fourth aspect, the layout confirmation information includes second layout information;
the generation apparatus further includes:
a second layout information determining unit, configured to: in response to an adjustment instruction sent by the terminal, perform layout adjustment on the first layout information based on the adjustment instruction, to obtain the second layout information; and
the derived data generation unit includes:
   a second derived data generation unit, configured to generate the at least one piece of second multimedia data based on the second layout information and the setting parameter.

In a possible implementation of the fourth aspect, the layout confirmation information is further used to determine a second area in the first multimedia data, and the derived data generation unit includes:
a derived area data generation unit, configured to generate at least one piece of derived area data associated with the second area; and
a derived area merging unit, configured to generate the second multimedia data based on first area data of the first area and the derived area data.

In a possible implementation of the fourth aspect, the setting parameter includes a derivation quantity N, and the derived area data generation unit is specifically configured to generate N pieces of derived area data associated with the second area.

The derived area merging unit is specifically configured to generate N pieces of second multimedia data based on the N pieces of derived area data and the first area data.

In a possible implementation of the fourth aspect, the setting parameter includes an association indicator, and the derived area data generation unit includes:
a semantic description determining unit, configured to perform semantic recognition on second area data of the second area, to obtain semantic description information of the second area; and
a semantic description generation unit, configured to generate the at least one piece of derived area data based on the association indicator and the semantic description information.

In a possible implementation of the fourth aspect, the setting parameter includes a target size, and the derived data generation unit includes:
a size adjustment unit, configured to generate, based on the layout confirmation information, the at least one piece of second multimedia data that matches the target size.

In a possible implementation of the fourth aspect, the setting parameter includes an industry type corresponding to the first multimedia data, and the derived data generation unit includes:
an industry type determining unit, configured to determine, in the first multimedia data based on the industry type corresponding to the first multimedia data, at least one first area corresponding to the industry type; and
a layout confirmation information generation unit, configured to obtain the layout confirmation information based on the at least one first area.

According to a fifth aspect, an embodiment of this application provides a terminal, including a memory, a processor, and a program stored in the memory. When executing the program, the processor implements the steps in the multimedia data generation method according to the first aspect.

According to a sixth aspect, an embodiment of this application provides a server, including a memory, a processor, and a program stored in the memory. When executing the program, the processor implements the steps in the multimedia data generation method according to the first aspect.

According to a seventh aspect, an embodiment of this application provides a readable storage medium. The readable storage medium stores a program, and when the program is executed by a processor, the steps in the multimedia data generation method according to any one of the first aspect or the third aspect are implemented.

According to an eighth aspect, an embodiment of this application provides a program product. When the program product runs on a device, the device is enabled to perform the steps in the multimedia data generation method according to any one of the first aspect or the third aspect.

According to a ninth aspect, an embodiment of this application provides a multimedia data generation system. The multimedia data generation system includes the terminal according to the fifth aspect and the server according to the sixth aspect.

It may be understood that, for beneficial effects of the second aspect to the ninth aspect, refer to the related descriptions in the first aspect. Details are not described herein again.

### BRIEF DESCRIPTION OF DRAWINGS

FIG. 1 is a diagram of generating promotion images in batches in an existing technology;
FIG. 2 is another diagram of generating promotion images in batches in an existing technology;
FIG. 3 is a diagram of a derived image generated based on an existing manner of generating a promotion image;
FIG. 4 is a diagram of an application scenario of a multimedia data generation method according to an embodiment of this application;
FIG. 5 is an implementation flowchart of a multimedia data generation method according to an embodiment of this application;
FIG. 6(a) to FIG. 6(d) are a diagram of an operation of generating derived multimedia data according to an embodiment of this application;
FIG. 7(a) to FIG. 7(c) are a diagram of performing a setting operation on the foregoing type setting item according to an embodiment of this application;
FIG. 8(a) and FIG. 8(b) are a diagram of first layout information according to an embodiment of this application;
FIG. 9 is a diagram of comparison between original multimedia data and derived multimedia data according to an embodiment of this application;
FIG. 10 is a diagram of generating derived multimedia data based on a target size according to an embodiment of this application;
FIG. 11 is a diagram of generating a plurality of pieces of multimedia data based on derived data according to an embodiment of this application;
FIG. 12A and FIG. 12B are a diagram of generating derived multimedia data according to an embodiment of this application;
FIG. 13 is a diagram of generating derived multimedia data according to an embodiment of this application;
FIG. 14 is a diagram of storing derived multimedia data according to an embodiment of this application;
FIG. 15 is a diagram of an application scenario of a multimedia data generation method according to another embodiment of this application;
FIG. 16 is an interaction flowchart of a multimedia data generation method according to an embodiment of this application;
FIG. 17 is an implementation flowchart of a multimedia data generation method on a server side according to an embodiment of this application;
FIG. 18 is a block diagram of a structure of a multimedia data generation apparatus used for a terminal according to an embodiment of this application;
FIG. 19 is a block diagram of a structure of a multimedia data generation apparatus used for a server according to an embodiment of this application; and
FIG. 20 is a diagram of a structure of an electronic device according to an embodiment of this application.

### DESCRIPTION OF EMBODIMENTS

In the following descriptions, for illustration instead of limitation, details such as a particular system structure and a technology are provided to make a thorough understanding of embodiments of this application. However, persons skilled in the art should know that this application may also be implemented in other embodiments without these details. In other cases, detailed descriptions of a well-known system, apparatus, circuit, and method are omitted, so as not to obscure the description of this application with unnecessary detail.

It should be understood that the term "include"/"comprise" when used in the specification of this application and the appended claims indicates the presence of the described features, wholes, steps, operations, elements, and/or components, but does not preclude the presence or addition of one or more other features, wholes, steps, operations, elements, components, and/or collections thereof.

It should be further understood that the term "and/or" used in this specification and the appended claims of this application indicates any combination and all possible combinations of one or more items listed in association, and includes the combinations.

As used in this specification and the appended claims of this application, based on the context, the term "if" may be interpreted as "when" or "once" or "in response to determining" or "in response to detecting". Likewise, the phrase "if it is determined that" or "if (a described condition or event) is detected" may be interpreted as a meaning of "once it is determined that" or "in response to determining" or "once (a described condition or event) is detected" or "in response to detecting (a described condition or event)" depending on the context.

In addition, in the descriptions of this specification and appended claims of this application, the terms "first", "second", "third", and the like are merely intended for the purpose of differentiated description, but shall not be understood as an indication or an implication of relative importance.

Reference to "an embodiment", "some embodiments", or the like described in this specification of this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

With continuous advancement of electronic processes, a carrier of information promotion gradually develops from paper media to electronic media. Therefore, how to efficiently generate, in batches, electronic media content required by a user, for example, multimedia data such as a video and an image used for information promotion, becomes an attention focus of people. In an existing multimedia technology, multimedia data may be generated in batches by importing into a fixed template, which may specifically include the following two manners:

### Manner 1:

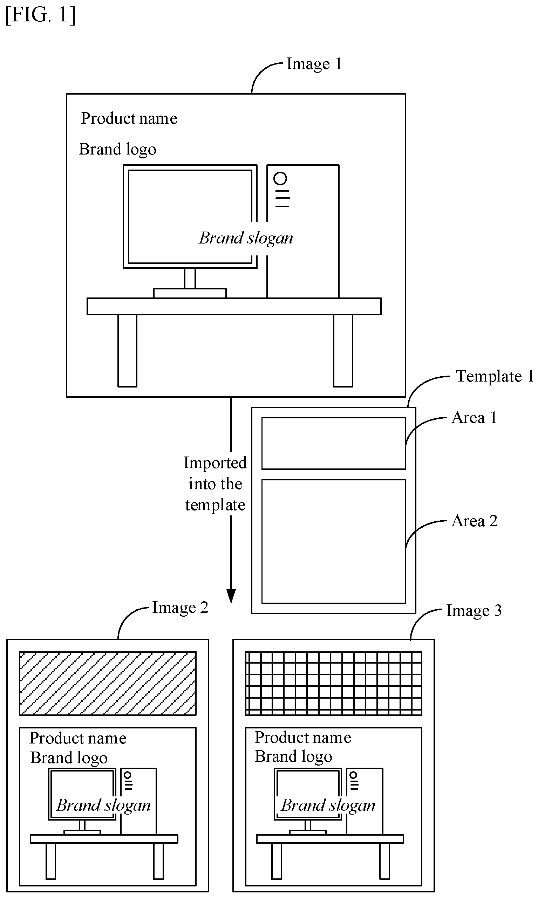

FIG. 1 is a diagram of generating promotion images in batches in an existing technology. Refer to FIG. 1. A user may generate a promotion image, in other words, an image 1, according to a promotion requirement of a product. The image 1 includes promotion content related to the product. The promotion content may be a product name, a brand logo (logo), a brand slogan, or the like. If the user needs to generate derived images of the image 1 in batches, the image 1 may be imported into a template 1 in FIG. 1. An area 1 in the template 1 is an area of an inherent element in the template. Different area content may be generated in the area by using a random generation algorithm. An area 2 is an area used to display an image imported by the user. For example, the area 1 imported by the user may be displayed in the area 2. A derived image finally obtained through merging may be an image 2 and an image 3 shown in FIG. 1. In the area 1, displayed content of the image 2 and displayed content of the image 3 are different, while in the area 2, displayed content of the image 2 and displayed content of the image 3 are the image 1 imported by the user, so that a derived image related to a promotion image is generated based on the same promotion image.

However, in the foregoing manner of generating the promotion image, although the area content in the area 1 can be adjusted based on the random generation algorithm, and the area content can be merged with the image imported by the user in the area 2, to generate a large quantity of derived images. However, in the foregoing manner, the area 2 occupies only a partial area of the derived image. As a result, product content that needs to be promoted may not be effectively learned of by the user. In other words, when the user views the derived image, visual attention of the user is diverted to unrelated random content in the area 1. Consequently, effect of the derived image on product promotion is weakened, in other words, visibility of the promotion content of the product is low.

### Manner 2:

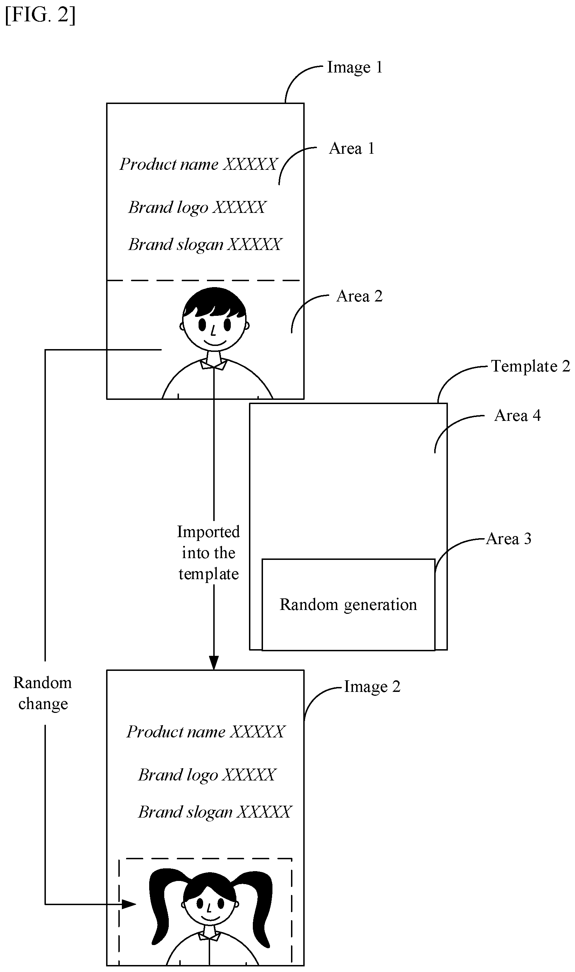

FIG. 2 is another diagram of generating promotion images in batches in an existing technology. Refer to FIG. 2. A promotion image of a user is an image 1, and the image 1 includes an area 1 for promotion content and an area 2 for background content. If the user needs to generate derived images of the image 1 in batches, the image 1 may be imported into a template 2 in FIG. 2. The template 2 includes an area 3 for generating random content and an area 4 for retaining original content. In this case, if the area 1 for the promotion content included in the image 1 overlaps the area 4 for retaining the original content in the template 2, corresponding derived content may be randomly generated by using the template 2 for a part that overlaps the area 2 and the area 4, to generate an image 2 shown in FIG. 2. Content of the area 4 may be generated based on a random generation algorithm for different content, so that derived images related to the image 1 are generated in batches by changing the content of the area 4.

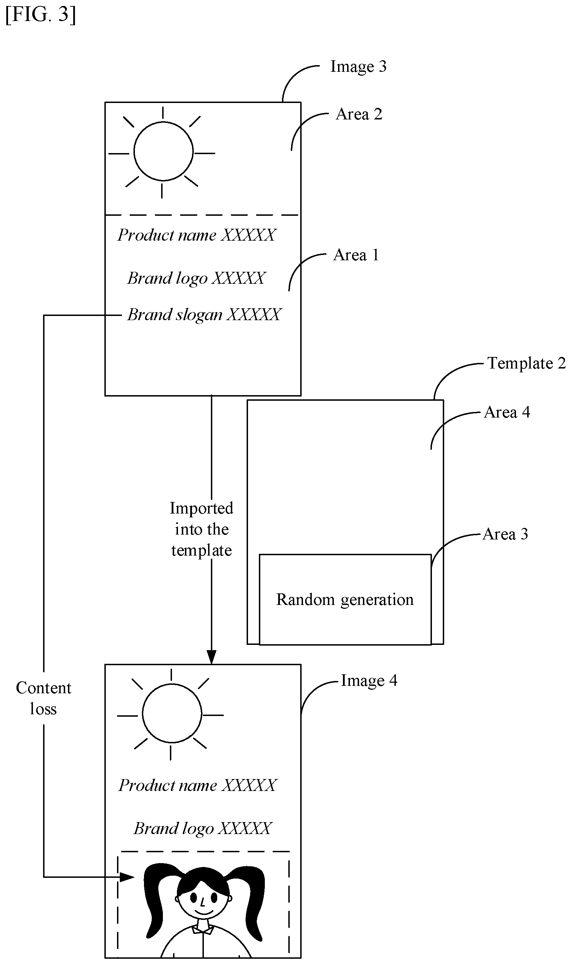

However, in the foregoing manner of generating the promotion image, because the area for the retained content and the area for the random content in the template 2 are fixed, if the area 1 for displaying the promotion content in the promotion image 1 of the user overlaps the area 3, the needed promotion content may be lost. For example, FIG. 3 is a diagram of a derived image generated based on an existing manner of generating a promotion image. Refer to FIG. 3. An area 1 for displaying promotion content in an image 3 overlaps an area 3 for generating random content in a template 2. Therefore, when a derived image of the image 3 is generated by using the template 2, a part of text in the area 1 is lost, and an image 4 shown in FIG. 3 is obtained. In this case, a user can only manually adjust the template 2, so that the template 2 can adapt to a promotion image that is input each time, reducing efficiency of generating the derived image.

Therefore, to resolve a problem in an existing technology for generating multimedia data in batches that compared with original multimedia data of a user, derived multimedia data generated in batches has lower visibility of content that needs to be retained by the user, and the retained content cannot be dynamically adjusted based on the multimedia data due to a fixed template, resulting in a loss of needed promotion content. This application provides a multimedia data generation method, to maintain visibility of the content that needs to be retained by the user and avoid a loss of the retained content when the derived multimedia data can be generated in batches.

### Embodiment 1:

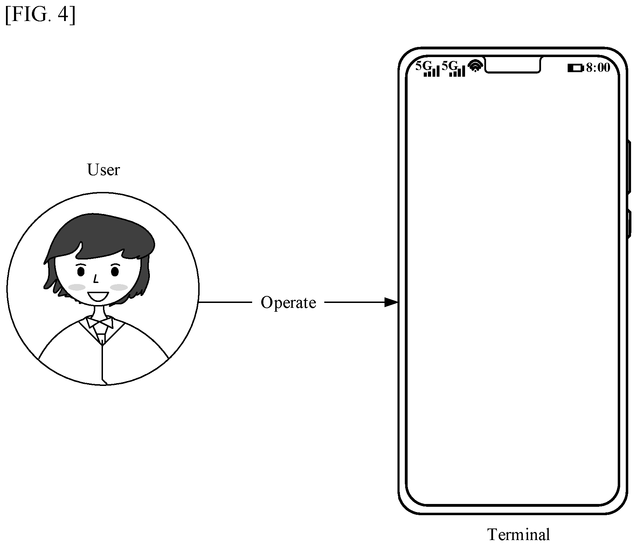

For example, FIG. 4 is a diagram of an application scenario of a multimedia data generation method according to an embodiment of this application. Refer to FIG. 4. In the application scenario, the multimedia data generation method is specifically performed by a terminal. The terminal may be a terminal device such as a smartphone, a notebook computer, a tablet computer, or a desktop computer. An application used to generate derived multimedia data in batches may be installed in the terminal, and a user may generate derived multimedia data in batches by using the application running in the terminal.

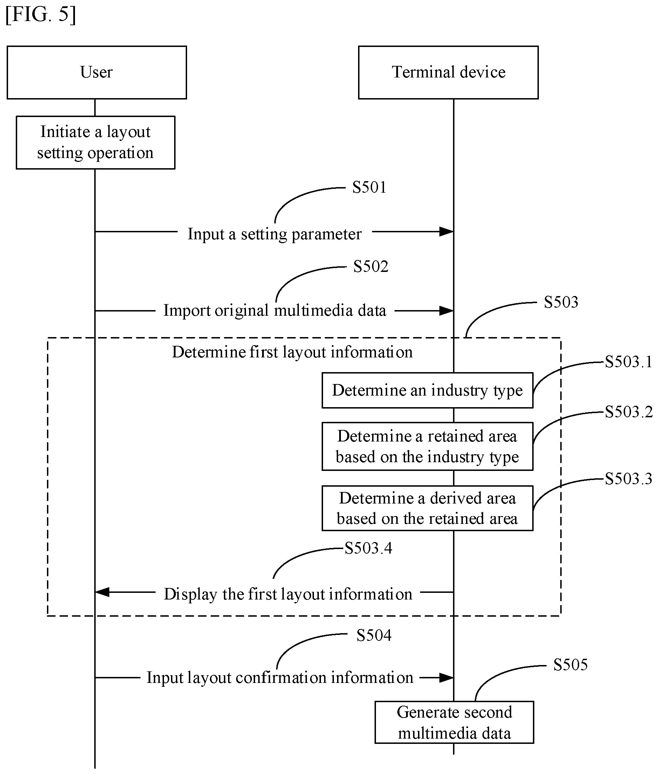

The following specifically describes an implementation process of the multimedia data generation method provided in this embodiment of this application. With reference to the application scenario in FIG. 4, FIG. 5 is an implementation flowchart of a multimedia data generation method according to an embodiment of this application. Refer to FIG. 5. The multimedia data generation method provided in this embodiment of this application specifically includes five steps: step S501 of setting a derived parameter, step S502 of importing original multimedia data, step S503 of processing setting data, step S504 of confirming layout information, and step S505 of generating derived multimedia data, where specific implementation processes of the five steps are described in detail as follows:

S501: A terminal device receives a layout setting operation initiated by a user, and determines at least one setting parameter input by the user, where the setting parameter includes an industry type, a target size, a derivation quantity, and an association indicator.

In this embodiment, an application for generating derived multimedia data in batches may be installed in the terminal. The user may start the application in the terminal, to display a corresponding operation interface on the terminal, and initiate the layout setting operation for the derived multimedia data in the operation interface, so that a personalized related setting can be performed on an area layout of the derived multimedia data, to improve accuracy of the layout information and alignment with a user promotion requirement.

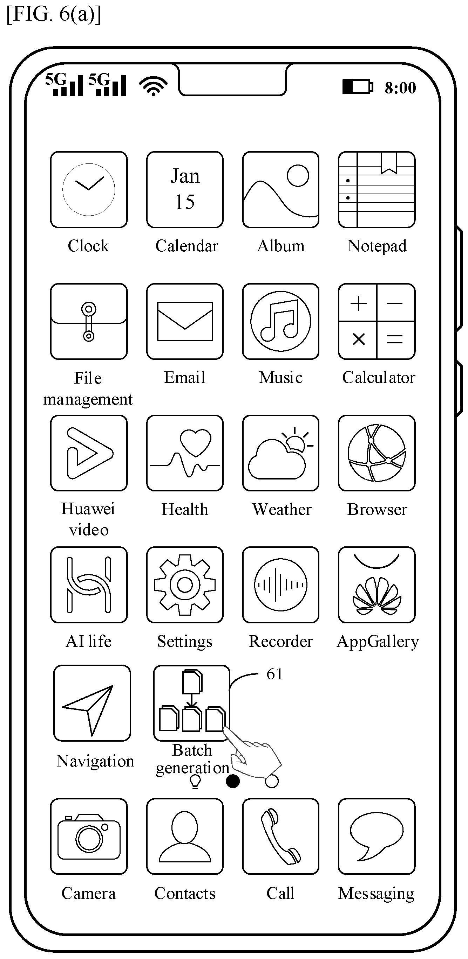

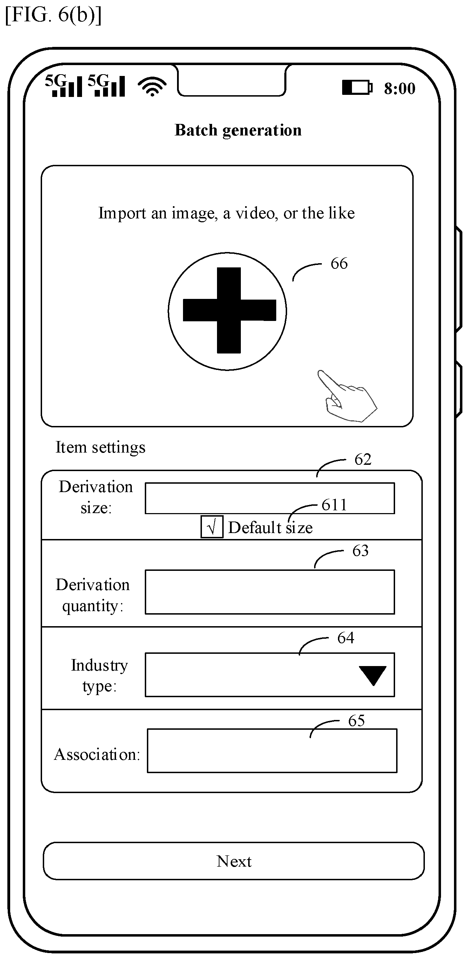

For example, FIG. 6(a) to FIG. 6(d) are a diagram of an operation of generating derived multimedia data according to an embodiment of this application. Refer to FIG. 6(a). A plurality of different applications are installed in a terminal, including an application 61 for generating derived multimedia data in batches. A user may start, by starting the application 61, a corresponding operation interface for batch generation, as shown in FIG. 6(b). The operation interface includes a plurality of setting items: a size setting item 62, a derivation quantity setting item 63, a type setting item 64, an association setting item 65, and the like. The user may set the foregoing setting items in the operation interface according to a requirement of the user, in other words, initiate a corresponding layout setting operation.

In some implementations, the layout setting operation initiated by the user may specifically include the following several setting parameters, in other words, an operation corresponding to setting of the setting items 62 to 65 in FIG. 6(a) to FIG. 6(d). Specific descriptions are as follows:

### Setting parameter 1: target size

In this embodiment, the user may set a size value of derived multimedia data. In this case, the user may input the target size, for example, 720*1080, in the size setting item 62, in other words, a length-width ratio of the derived multimedia data is limited. In some implementation scenarios, the target size may be 720 cm*1080 cm, in other words, a specified size value may alternatively be set. In some implementation scenarios, the target size may alternatively be 720 pixels (pixel, pi)*1080pi, in other words, when a size of the derived multimedia data is determined, resolution of the derived multimedia data can also be set. Specific input content of the target size may be set according to an actual situation, and a dimension for setting the size is not limited herein.

In some implementations, if the size of the derived multimedia data is the same as that of original multimedia data, the size setting item 62 may be configured as a default value, in other words, no content is input into the setting item 62.

In some implementations, the user may alternatively set a default size in an application. When the user does not set the size setting item 62, the derived multimedia data may be set to the default size.

In some implementations, the operation interface may further include a selection control for a default size, for example, a control 611. If the user selects the default size, the size of the derived multimedia data is set to the preset default size, in other words, the user does not need to fill in a size each time, to improve operation efficiency of the user.

### Setting parameter 2: derivation quantity

In this embodiment, the user may set a quantity of derived multimedia data that needs to be generated. The user may modify a value in the derivation quantity setting item 63, to generate a specified quantity of derived multimedia data quantitatively. For example, if the user needs to publish different promotion images on six platforms, in addition to the original multimedia data that has been generated, five additional derived promotion images are needed. In this case, 6 may be input into the derivation quantity setting item 63, in other words, an operation of setting the derivation quantity is initiated.

In some implementations, the user may alternatively set a default derivation quantity in the application. For example, the default derivation quantity is 6. When the user does not set the derivation quantity setting item 63, the derived multimedia data may be set to the default derivation quantity.

In some implementations, when the user does not set the derivation quantity setting item 63, the derivation quantity may be set to be the same as a derivation quantity in a previous user operation. For example, the application of the terminal may establish corresponding operation databases for different users, and record an operation record of generating derived multimedia data by the user in batches each time. In the operation record, related information of the derived multimedia data generated in batches each time, for example, a quantity of generated derived multimedia data, is recorded. Based on this, when it is detected that the user does not set a current derivation quantity, a derivation quantity corresponding to a previous operation may be obtained from the operation record, and is used as a derivation quantity of derived multimedia data generated in batches this time.

### Setting parameter 3: industry type

In this embodiment, the user may specify an industry type of the imported original multimedia data. To accurately locate, from the original multimedia data, an area (in other words, the foregoing first area) that needs to be retained, the user may specify the industry type of the original multimedia data in the operation interface, in other words, set the type setting item 64. Because a layout of the multimedia data is usually related to an industry type corresponding to a product that needs to be promoted, setting the industry type can facilitate subsequent determining of the area (in other words, the first area) in which content needs to be retained in the original multimedia data.

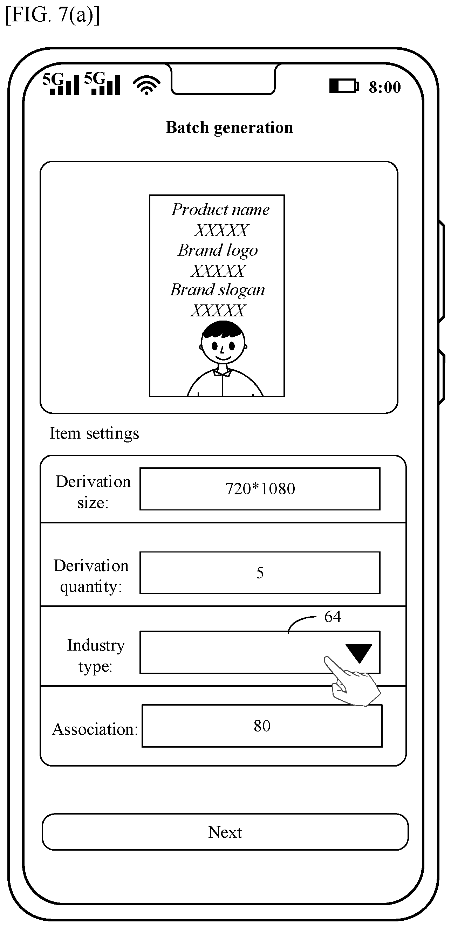

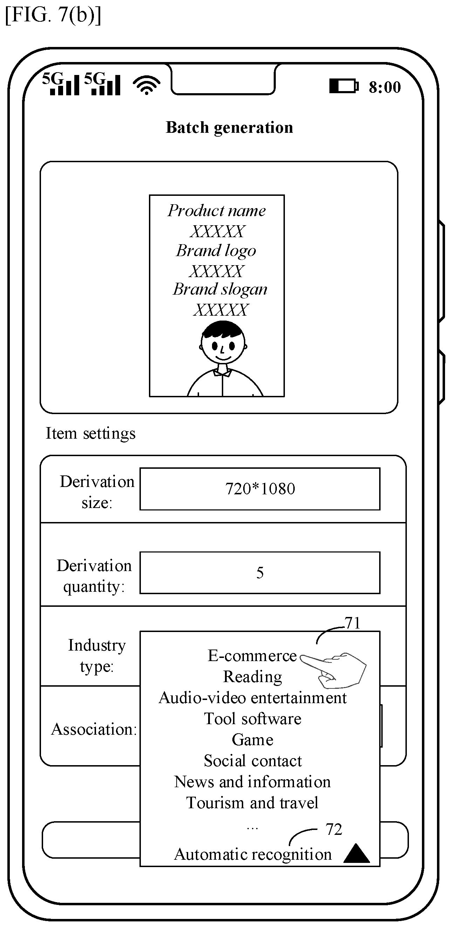

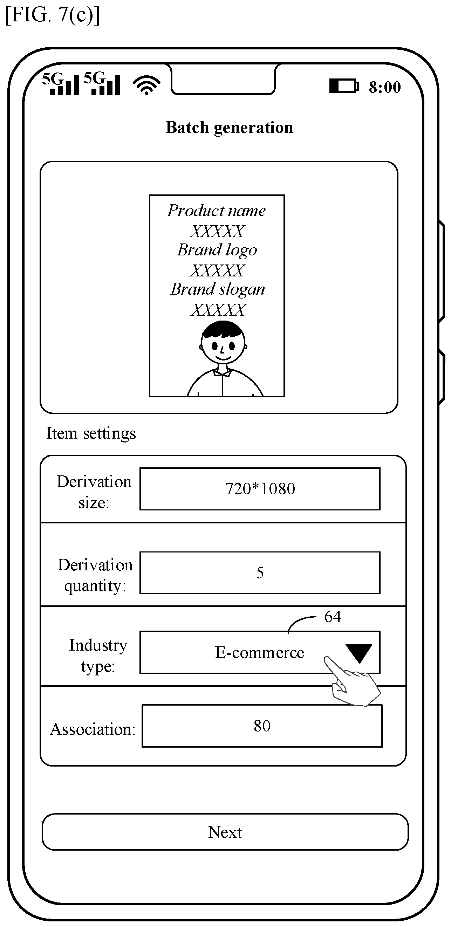

For example, FIG. 7(a) to FIG. 7(c) are a diagram of performing a setting operation on the foregoing type setting item according to an embodiment of this application. Refer to FIG. 7(a). After importing original multimedia data (or before importing multimedia data), a user may set the type setting item 64, and tap the type setting item 64, to display a corresponding drop-down menu, in other words, a menu 71, as shown in FIG. 7(b). The foregoing industry types may be classified based on an industry to which a promotion user of multimedia data belongs, in other words, the menu 71 may display a plurality of candidate industry types, for example, E-commerce, reading, audio-video entertainment, tool software, game, social contact, news and information, tourism and travel, automobile, life service, finance, real estate, education, and health care. Certainly, the foregoing industry types may alternatively be classified in another manner, for example, classified based on content of multimedia data, for example, game, electric appliance, food, and medical care. A specific classification manner of the industry types is not limited. The user may select one of the foregoing plurality of candidate types as an industry type corresponding to the original multimedia data, for example, select "E-commerce" as an industry type, and then the corresponding industry type is filled in the setting item 64, as shown in FIG. 7(c).

In some implementations, the foregoing operation interface may further include an option 72 for automatic recognition. When the user taps the option 72, type recognition may be performed by using an application on the multimedia data imported by the user.

Content that needs to be retained varies for different industry types. For example, if the industry type is an electric appliance type, content that needs to be retained is content related to a target electric appliance and related information such as an electric appliance model. If the industry type is a game type, content that needs to be retained is a game name, a game logo, a main role, and the like. In other words, focuses of content that needs to be retained are different for the industry types. To improve accuracy of subsequent recognition of the first area, the industry type may be set, in other words, a layout setting operation is performed on the type setting item 64, to improve accuracy of subsequent recognition.

In some implementations, the user may first import the original multimedia data. The application that is installed in the terminal and that is used to generate the derived multimedia data in batches may perform data analysis on the original multimedia data, determine the industry type corresponding to the original multimedia data, and display the industry type in the type setting item 64. If the industry type automatically recognized by the application does not meet a classification expectation of the user for the original multimedia data, the industry type of the original multimedia data may be adjusted by tapping the type setting item 64. If the industry type automatically recognized by the application is consistent with a classification expectation of the user for the original multimedia data, the industry type may not need to be adjusted, to improve operation efficiency of the user.

In some implementations, the user may alternatively set a default industry type in the application, for example, set the default industry type to the electric appliance type. When the user does not set the type setting item 64, the industry type may be set to the default industry type, for example, the electric appliance type.

### Setting parameter 4: association indicator

In this embodiment, the user may set a content association between derived multimedia data and original multimedia data. The operation interface includes the association setting item 65, and the user may adjust the content association between the derived multimedia data and the original data by setting an association indicator in the association setting item 65. For example, the association indicator may be a value, for example, any value between 1 and 5. A higher value of the association indicator indicates a higher content association between the derived multimedia data and the original multimedia data. On the contrary, a lower value of the association indicator indicates a lower content association between the derived multimedia data and the original multimedia data. Optionally, the value may be any value between 0% and 100%. For example, if 80 is filled in the association setting item 65, it indicates that the association indicator is 80%. A specific value range may be set according to an actual situation, and is not limited herein.

In some implementations, content filled in the association setting item 65 may alternatively be a degree descriptor, for example, strong, medium, or weak. The user may fill a corresponding degree descriptor in the association setting item 65 based on an association between the derived multimedia data and the original multimedia data. The application for generating the derived multimedia data in batches may determine, based on a correspondence between a degree descriptor and an association indicator, an association indicator corresponding to each degree descriptor.

In this embodiment, the application for generating the derived multimedia data in batches may generate at least one piece of derived multimedia data corresponding to the original multimedia data, where content that needs to be retained exists between the original multimedia data and the derived multimedia data, in other words, content of the first area. Content other than the first area may be randomly generated by using a related algorithm of the application. Therefore, the association indicator may be set to determine a content association between the randomly generated content and the original multimedia data, to directionally control the randomly generated area content and improve accuracy of the random content in the derived multimedia data.

In some implementations, the user may alternatively set a default association indicator in the application, for example, set the default association indicator to 80%. When the user does not set the association setting item 65, the association indicator may be set to a default value, for example, 80%.

S502: The terminal device obtains the original multimedia data in response to a data import operation initiated by the user.

In some implementations, the original multimedia data may be multimedia data such as image data, video data, document data, and web page data. A data type of the multimedia data is not specifically limited.

In this embodiment, when the terminal starts the application for generating the derived multimedia data in batches, the corresponding operation interface further includes an import control for multimedia data. The original multimedia data (in other words, the first multimedia data) used to generate the derived multimedia data is imported into the application by using the import control, so that the derived multimedia data based on the original multimedia data can be generated.

FIG. 6(a) to FIG. 6(d) are still used as an example for description. Refer to FIG. 6(b), the setting operation interface further includes an import area 66 for multimedia data. The user may import the original multimedia data into the import area 66.

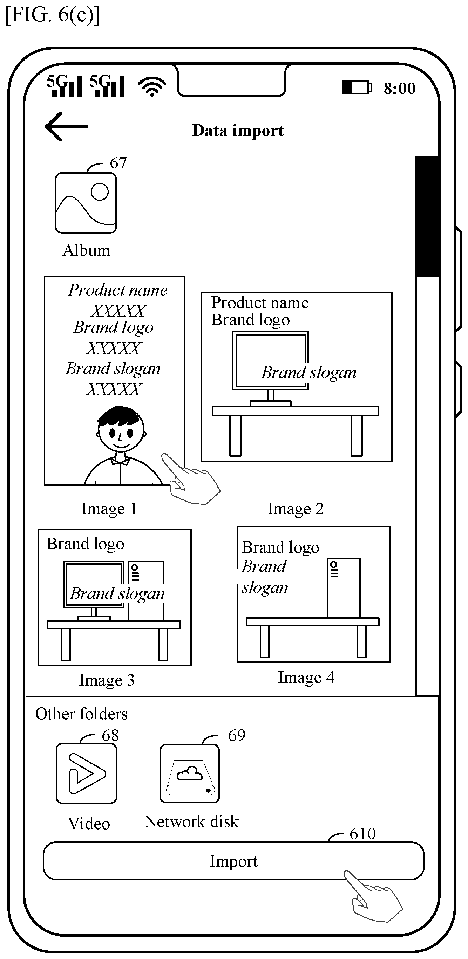

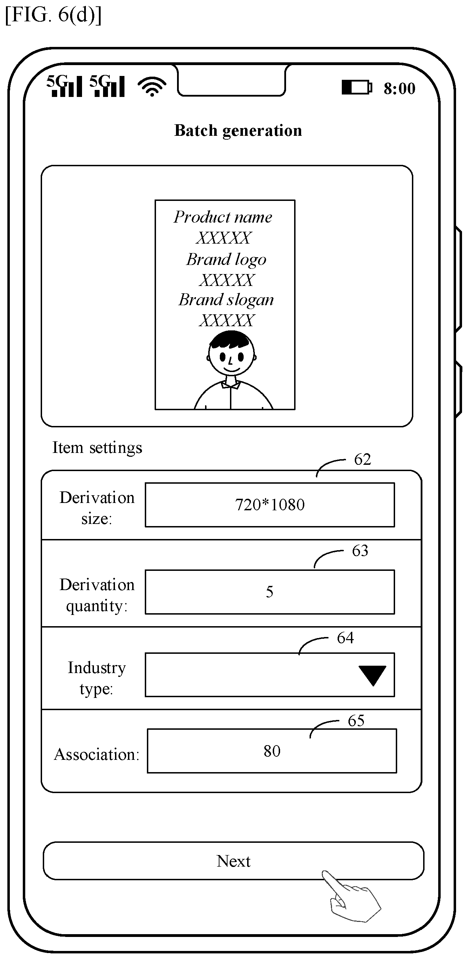

For example, the terminal generates a multimedia data selection interface in response to a tap operation of the user on the import area 66, as shown in FIG. 6(c). The user may select multimedia data from a local storage area, for example, an album folder 67 and a video folder 68, or may download the original multimedia data from a cloud server, for example, a network disk 69. After selecting the original multimedia data, for example, selecting the image 1, the user may tap the import control 610 to import the original multimedia data into the application, to obtain a corresponding import completion operation interface, as shown in FIG. 6(d), and then continue to set another setting item.

It should be noted that, the user may first set each setting item, and then import the original multimedia data, or may first import the original multimedia data, and then set each setting item. A sequence of performing the foregoing two operations is not limited herein.

S503: The terminal device determines first layout information of the original multimedia data based on the setting parameter in response to a setting completion operation initiated by the user.

In this embodiment, after completing the setting, the user may tap a next control shown in FIG. 6(d), and generate corresponding layout information by using the application for generating the derived multimedia data in batches. The setting interface includes the setting parameter input by the user, for example, the industry type, the target size, the derivation quantity, and the association indicator. The electronic device may perform, based on the setting parameter, layout analysis on the original multimedia data imported by the user, determine at least one area for content retention, in other words, the first area, and generate the first layout information based on the first area.

In some possible implementations, the step of determining the first layout information may include:
S503.1: Determine the industry type of the original multimedia data based on the setting parameter.
S503.2: Recognize a retained area in the original multimedia data based on the industry type, to determine at least one first area.

In this embodiment, different content needs to be retained for different industry types. Therefore, the electronic device first extracts the industry type from the setting parameter (the industry type may be manually selected by the user, or may be automatically recognized by the electronic device after the electronic device performs data analysis on the original multimedia data), and determines corresponding retained content based on the industry type. After determining the content that needs to be retained, the electronic device may recognize, from the original multimedia data, an area corresponding to the retained content, and use the area as the first area.

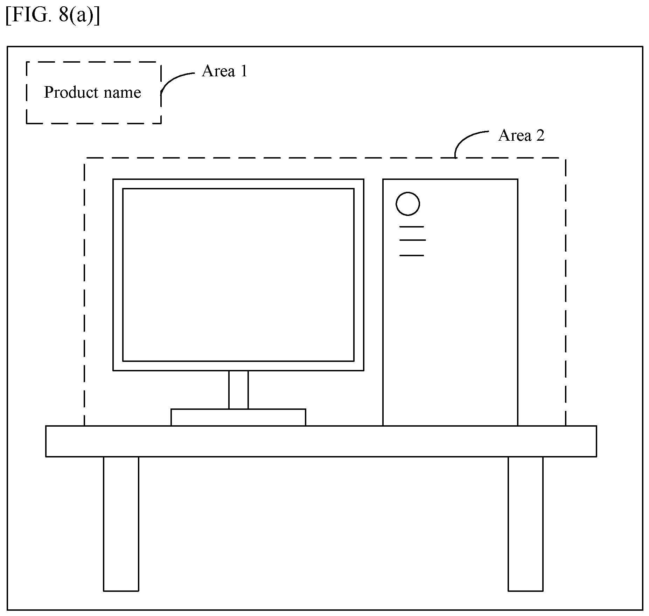

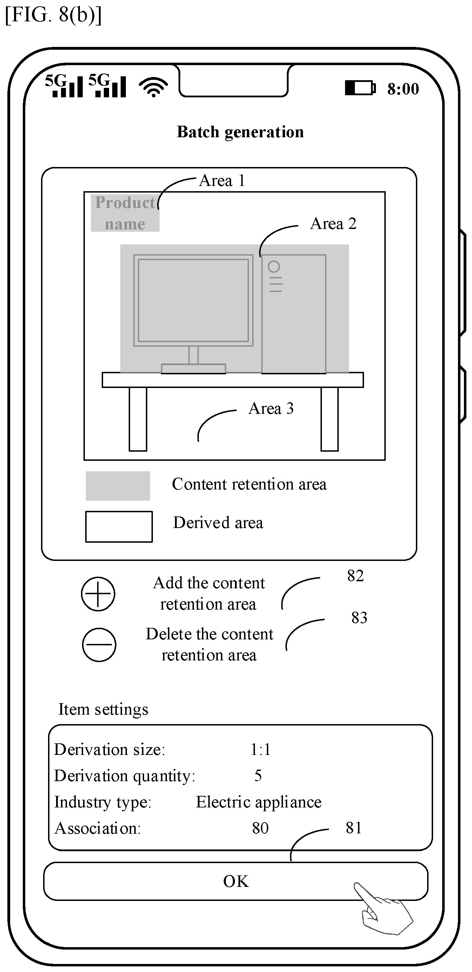

For example, FIG. 8(a) and FIG. 8(b) are a diagram of first layout information according to an embodiment of this application. Refer to FIG. 8(a). The original multimedia data imported by the user is image data, and the image data includes an area 1 for a product name and an area 2 for a product appearance. It is determined, based on a layout setting operation of the user, that the foregoing industry type is an electric appliance type, so that it may be determined that content that needs to be retained is an electric appliance name and an electric appliance appearance. Therefore, image analysis is performed on the image data imported by the user, to determine an area that needs to be retained, in other words, the area 1 and the area 2, and the first layout information is obtained based on the foregoing two areas, as shown in FIG. 8(b).

S503.3: Determine at least one derived area (in other words, a second area) in the original multimedia data based on the first area.

In this embodiment, the first area is an area in which content retention is performed. Therefore, the electronic device may determine, in an area other than the first area in the original multimedia data, the derived area in which random derivation can be performed, in other words, the second area. In some possible implementations, the area other than the first area may be used as the derived area, or a part of the area other than the first area may be selected as the derived area. This may be specifically determined according to an actual situation.

S503.4. Display the first layout information including the first area and the second area.

In this embodiment, after determining the first area and the second area, the electronic device may display, in the application for generating the derived multimedia data in batches, a prompt interface including the first layout information, as shown in FIG. 8(b), so that the user confirms whether the first layout information determined by the application is correct.

S504: The terminal device generates layout confirmation information in response to a layout confirmation operation input by the user.

In this embodiment, the terminal device may display the determined first layout information. If the user does not need to adjust the first layout information, the user may directly tap an OK control in the interface, for example, a control 81 in FIG. 8(b).

In a possible implementation, S504 may further include: In response to an adjustment operation initiated by the user based on the first layout information, the terminal performs layout adjustment on the first layout information, to generate second layout information.

In this embodiment, after determining, by using the foregoing application, the first layout information corresponding to the original multimedia data, the terminal may display the corresponding first layout information in the foregoing operation interface, as shown in FIG. 8(b). The user may determine, based on the first layout information, whether the first area recognized by the application is accurate, or determine whether the setting parameter that has been set needs to be adjusted, for example, the industry type and the derivation quantity that have been set. If the user does not need to adjust the first layout information, the user may tap the OK control 81. When the user does not need to adjust the first layout information, the terminal may perform an operation of S505 based on the first layout information. On the contrary, if the user needs to adjust the first layout information, the user may drag mark boxes corresponding to the area 1 and the area 2, to adjust a position of the first area that is recognized by the application. Certainly, in addition to adjusting the position of the first area, a size of the mark box may be further adjusted, in other words, a size of the first area is adjusted. A specific adjustment manner may be set according to an actual situation.

In a possible implementation, the adjustment operation further includes an operation of adding the first area, and the confirmation interface of the first layout information may further include a control 82 for adding an area. The user may tap the control 82 to add a mark box for selecting the first area, to add the first area that needs to be retained by the user.

In a possible implementation, the adjustment operation further includes an operation of deleting the first area. The confirmation interface of the first layout information may further include a control 83 for deleting an area. The user may tap the control 83 to select, from the recognized first area, the first area that needs to be deleted.

In some implementations, the first layout information further includes an area for performing derivation based on the original multimedia data, in other words, the second area, for example, an area 3 in FIG. 8(b). In addition to adjusting the first area, the user may further adjust the second area to adjust the second area.

S505: The terminal generates, based on the first layout information, at least one piece of second multimedia data that includes the first area.

In this embodiment, after determining the first layout information corresponding to the original multimedia data, the terminal may generate, based on the first layout information, the derived multimedia data (in other words, the second multimedia data) corresponding to the original multimedia data. Because content that needs to be retained in the original multimedia data, in other words, content displayed in the first area, is determined in the first layout information, the displayed content of the first area is retained in the derived multimedia data.

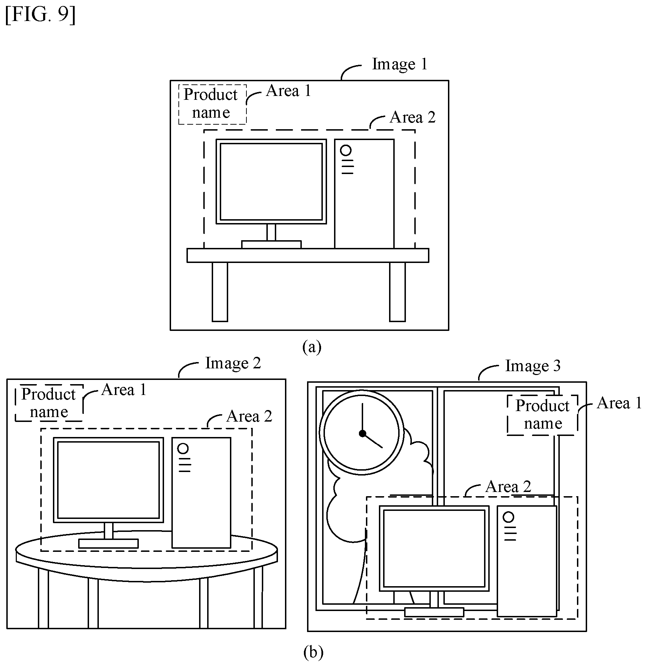

For example, FIG. 9 is a diagram of comparison between original multimedia data and derived multimedia data according to an embodiment of this application. Refer to (a) in FIG. 9. The original multimedia data is image data, in other words, an image 1. The image 1 includes an area 1 for a product name and an area 2 for a product appearance. The two areas are areas that need to be retained, in other words, the first area in the first layout information. When generating the derived multimedia data corresponding to the original multimedia data, the terminal retains content of the two areas, and generates, by using a corresponding algorithm, content that is related to an area other than the two areas in the original multimedia data to some extent, in other words, obtains an image 2 and an image 3 shown in (b) in FIG. 9. Compared with the image 1, in the image 2, positions of the two areas in the entire image are consistent with those in the image 1, in other words, positions and content of the two areas are not changed, and content other than that of the two areas is adjusted.

In some implementations, a position of the area of the retained content in the image may be changed, for example, the image 3 shown in (b) in FIG. 9. Compared with the image 1, the image 3 retains content of the two areas, but relative positions of the two areas in the entire image are changed. The display positions of the two areas may be determined based on factors such as an aesthetic engine and picture composition of the entire image. A display position of the first area in the derived multimedia data is not limited herein.

Corresponding to the foregoing plurality of setting parameters, in other words, when generating the derived multimedia data, the terminal may also perform corresponding operations based on different setting parameters. Specific descriptions are as follows:

### Execution content 1: corresponding execution content in response to the target size

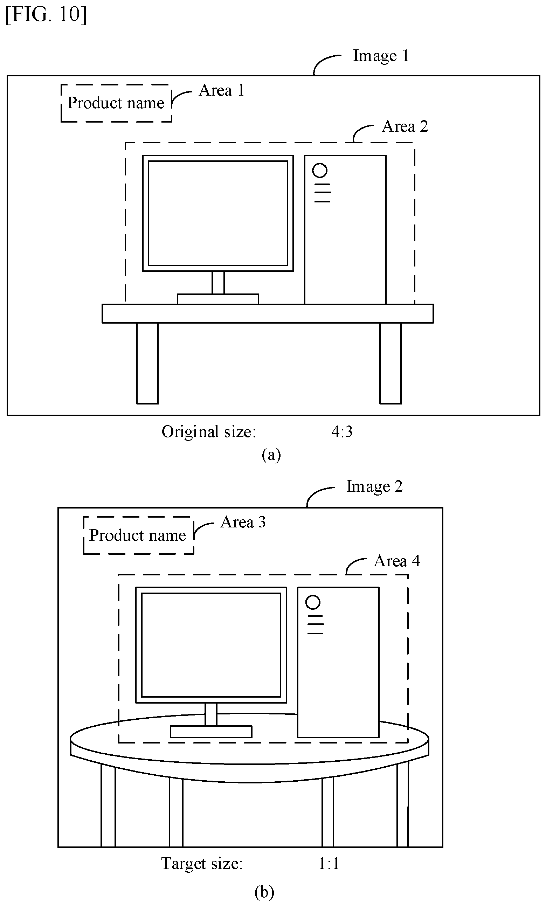

In this embodiment, if an original size of the original multimedia data is inconsistent with the target size in the first layout information, the terminal may generate derived multimedia data corresponding to the target size. For example, FIG. 10 is a diagram of generating derived multimedia data based on a target size according to an embodiment of this application. Refer to (a) in FIG. 10. The original multimedia data is image data, in other words, an image 1, and a size of the image 1 is 4:3. However, a target size obtained through adjustment by the user is 1:1, and two sizes are inconsistent. The terminal generates derived multimedia data based on a specification of the target size, for example, an image 2 shown in (b) in 10. Similarly, content (in other words, an area 1 and an area 2) retained in the image 1 is also displayed in the image 2, in other words, an area 3 and an area 4.

In some implementations, to ensure visibility of the retained content, area sizes of the area 1 and the area 3 are the same, and area sizes of the area 2 and the area 4 are the same.

### Execution content 2: corresponding execution content in response to the derivation quantity

In this embodiment, the setting parameter recorded in the first layout information includes the derivation quantity. The derivation quantity may be set by the user, or may be determined based on a default setting. For a specific determining manner, refer to the related descriptions in S501. Details are not described herein again. If the derivation quantity is N, and N is a positive integer greater than 0, the terminal generates N pieces of derived multimedia data. Each piece of derived multimedia data includes displayed content of the first area. The terminal may generate, based on the derivation quantity N, N pieces of derived area data associated with displayed content of the second area, and separately merge each piece of derived area data with the displayed content (in other words, the first area data) that is of the first area and that needs to be retained, to obtain the N pieces of derived multimedia data of the corresponding quantity.

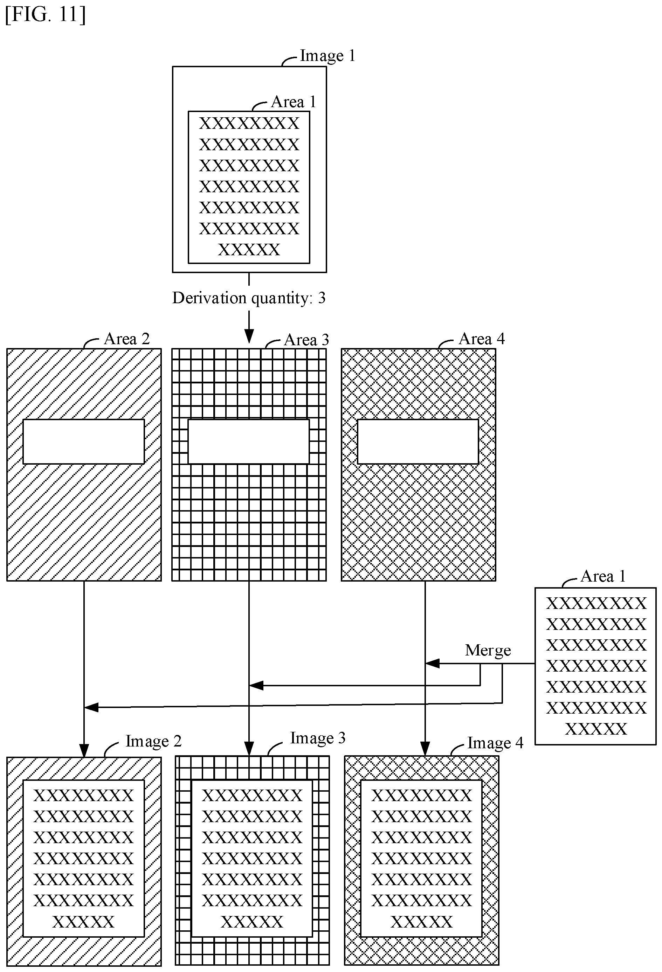

For example, FIG. 11 is a diagram of generating a plurality of pieces of multimedia data based on derived data according to an embodiment of this application. Refer to FIG. 11. The derivation quantity is 3. The terminal may extract first area data of a first area (in other words, an area 1) from original multimedia data (in other words, an image 1), generate three different derived area data, in other words, an area 2 to an area 4, based on semantic description information corresponding to a second area and an association indicator, and separately merge the three areas with the area 1, to obtain an image 2 to an image 4, so that a plurality of pieces of derived multimedia data are generated.

### Execution content 3: corresponding execution content in response to the association indicator

In this embodiment, the terminal device may determine, based on the association indicator, an association between derived area data in the multimedia data and second area data corresponding to the second area. If the association indicator indicates a higher association between the derived area data in the multimedia data and the second area data corresponding to the second area, a similarity between the generated derived area data and the second area data is higher. On the contrary, if the association indicator indicates a lower association between the derived area data in the multimedia data and the second area data corresponding to the second area, a similarity between the derived area data and the second area data is lower.

In some implementations, the foregoing process of generating the derived multimedia data based on the association indicator may specifically include the following steps.

Step 1: Perform area division on the original multimedia data based on the first area, to obtain the first area data corresponding to the first area and the second area data corresponding to the second area.

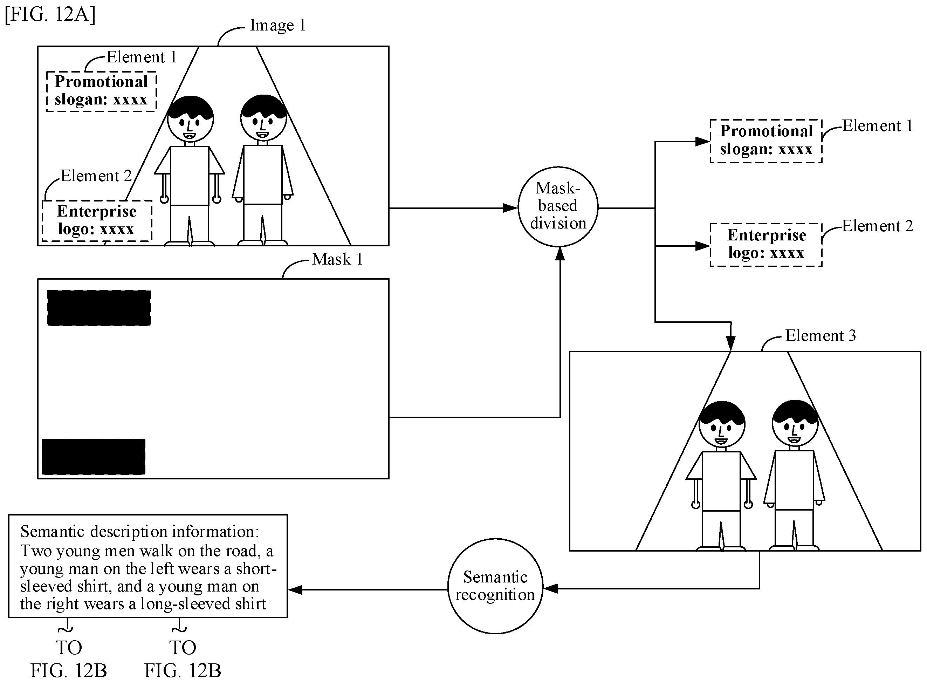

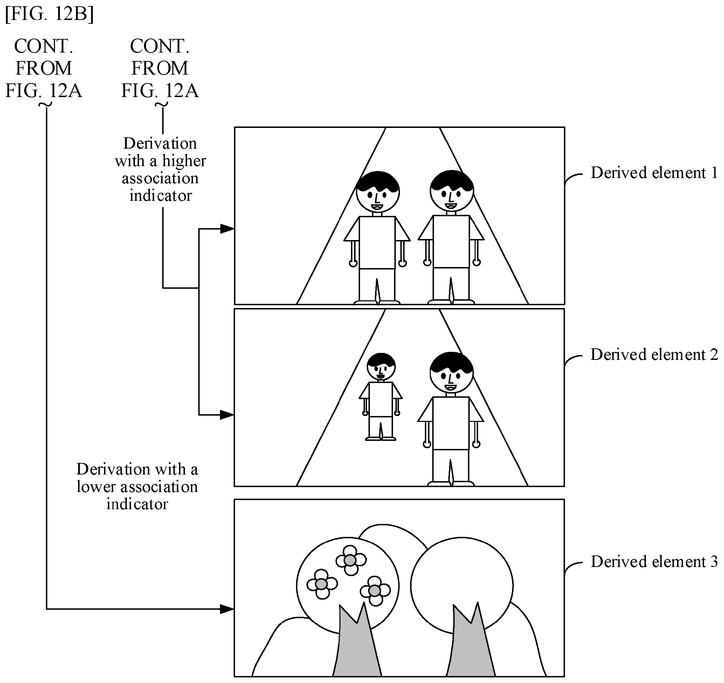

In this embodiment, the terminal may perform area division on the original multimedia data based on a position, in the original multimedia data, of the first area in the first layout information. For example, FIG. 12A and FIG. 12B are a diagram of generating derived multimedia data according to an embodiment of this application. Refer to FIG. 12A and FIG. 12B. The terminal may generate a mask 1 in FIG. 12A and FIG. 12B based on the position, in the original multimedia data, of the first area in the first layout information. In the mask 1, a pixel value corresponding to the first area may be set to 0, and a pixel value corresponding to the second area may be set to 255. The terminal may merge the mask 1 and the original multimedia data (in other words, an image 1), to obtain the first area data corresponding to the first area, in other words, obtain an element 1 and an element 2, and the second area data corresponding to the second area, in other words, an element 3, so that area data of different areas can be classified.

Step 2: Perform semantic recognition on the second area data of the second area, to obtain semantic description information of the second area.

In this embodiment, after classifying the original multimedia data, the terminal obtains the second area data corresponding to the second area, and performs semantic recognition on the second area data, in other words, converts multimedia data represented by a graph into semantic description information represented by text, so that derived area data that is associated with content to some extent can be generated based on the association indicator, to implement content directional derivation and improve accuracy of generating the derived area data.

In some implementations, a semantic recognition algorithm may be specifically a multi-modal model, and the semantic description information corresponding to the second area data is extracted by using the multi-modal model.

Still refer to FIG. 12A and FIG. 12B. The terminal may import the second area data into the semantic recognition algorithm, and determine semantic description information corresponding to the element 3, in other words, for example, "two young men walk on the road, a young man on the left wears a short-sleeved shirt, and a young man on the right wears a long-sleeved shirt".

Step 3: Generate at least one piece of derived area data based on the association indicator and the semantic description information.

In this embodiment, the terminal may determine, based on the association indicator, a content association between the derived area data and the second area data. For example, when a value of the association indicator is large, it indicates that the association between the derived area data and the second area data is high. In this case, corresponding derived area content may be generated in the derived area data based on the semantic description information.

For example, still with reference to FIG. 12A and FIG. 12B, a value of the association indicator is high, indicating that the association between the derived area data and the second area data is high. In this case, semantic description information corresponding to the derived area data may be "two young men walk on the road, a young man on the left wears a short-sleeved shirt, and a young man on the right wears a short-sleeved shirt", to obtain a derived element 1 and a derived element 2. A difference between the derived element 1 and the derived element 2 may be a relative position relationship between two youth men. For example, two youth men in the derived element 1 walk side by side, while two youth men in the derived element 2 does not walk side by side, but one is in front and the other is in back.

If a value of the association indicator is low, it indicates that the association between the derived area data and the second area data is weak. In this case, semantic description information corresponding to the derived area data may be "two trees are on a mountain, a tree on the left is blooming, and a tree on the right is not blooming", to obtain a derived element 3.

Step 4: Separately merge each piece of derived area data with the first area data of the first area, to obtain each piece of derived multimedia data.

In this embodiment, the terminal may merge the generated derived area data with the first area data corresponding to the first area. A display position of the first area data during merging may be consistent with or inconsistent with that of the original multimedia data. In some implementations, the terminal may import the derived area data and the first area data into a preset image merging model, for example, an image model constructed based on an aesthetic engine, to obtain corresponding derived multimedia data.

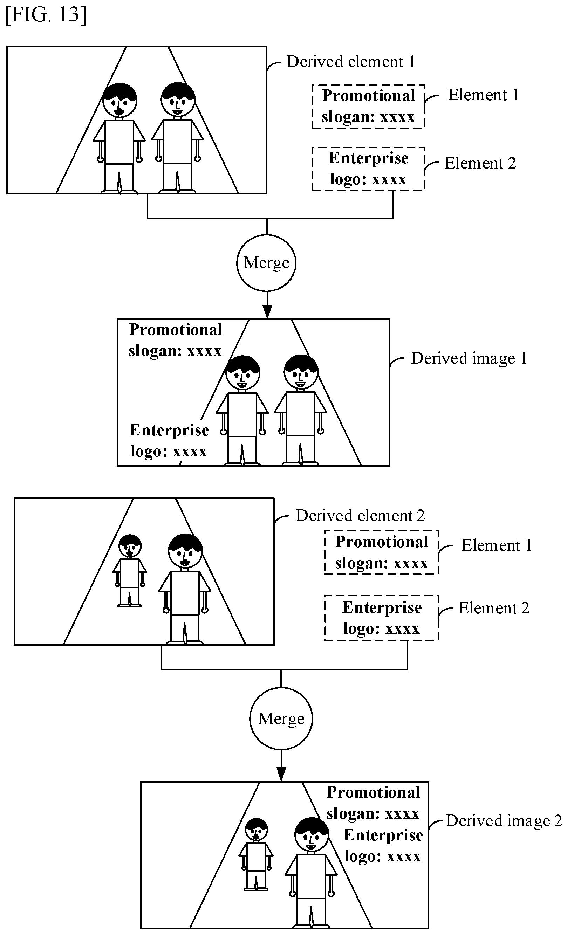

For example, FIG. 13 is a diagram of generating derived multimedia data according to an embodiment of this application. Refer to FIG. 13. The terminal may separately merge an element 1 and an element 2 with a derived element 1, to obtain a derived image 1. A position of an element corresponding to a first area in the derived image 1 is consistent with a position of the element in an image 1.

The terminal may merge the element 1, the element 2 with a derived element 2, to obtain a derived image 2. A position of the element corresponding to the first area in the derived image 1 may be different from a position of the element in the image 1.

In some implementations, if the target size is inconsistent with the original size of the original multimedia data, a size of the generated derived area data is determined based on the target size, and a size of the first area data corresponding to the first area may be kept consistent with the size of the original multimedia data. Because the target size of the derived area data is greater than the size of the first area data, when the foregoing two types of area data are merged, a size of the merged derived multimedia data is determined based on the target size of the derived area data.

In this embodiment, the industry type is specifically used to determine the first area in the original multimedia data, in other words, used to generate the first layout information. Therefore, in a process of generating the derived multimedia data, a corresponding operation may not be performed based on the industry type.

In some implementations, when the derived area data of the derived multimedia data is determined, the derived area data may be generated based on the association indicator and the industry type. In other words, when the derived area data is generated based on the semantic description information corresponding to the second area, the corresponding derived area data may be generated based on the association indicator, the industry type, and the semantic description information. For example, the industry type is an electric appliance type, and a scenario in which an electric appliance is usually used is an indoor scenario. In this case, when the derived area data is generated, a scenario of the multimedia data may be set to the indoor scenario, such as a home, a teacher, and an office, and then the derived area data of the indoor scenario is generated with reference to the semantic description information and the association indicator.

In some implementations, if the user adjusts the first layout information, in other words, after corresponding second layout information is obtained, S502 may be specifically: The terminal generates, based on the second layout information, at least one piece of second multimedia data that includes the first area. A specific manner of generating the second multimedia data based on the second layout information is the same as the manner of generating the second multimedia data based on the first layout information. For specific descriptions, refer to the foregoing descriptions. Details are not described herein again.

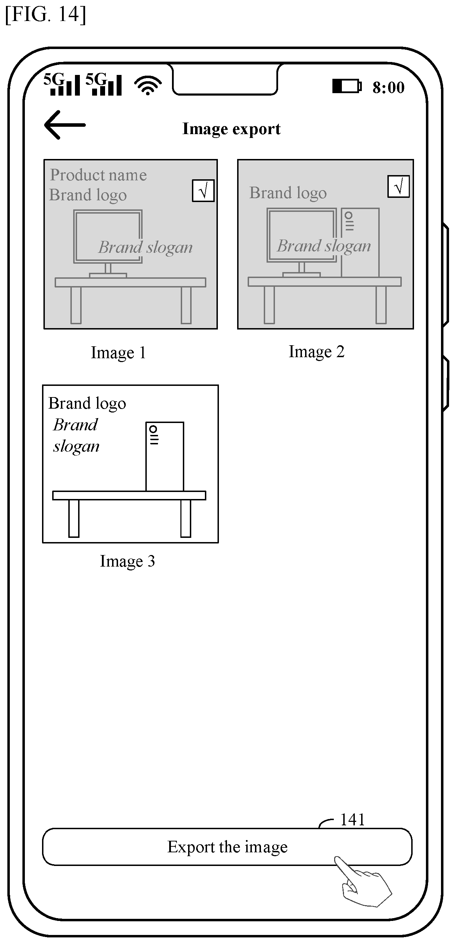

In this embodiment, after generating the derived multimedia data, the terminal may store the derived multimedia data in a memory of the terminal; or may select, based on an operation of the user, a part or all of the derived multimedia data for storage. For example, FIG. 14 is a diagram of storing derived multimedia data according to an embodiment of this application. After obtaining derived multimedia data, the terminal may display a plurality of pieces of generated derived multimedia data on a corresponding page, for example, an image 1 to an image 3 in FIG. 14. The user may select, from the plurality of images, derived multimedia data that needs to be exported, for example, select the image 1 and the image 2, and tap an export control 141, to store the selected images in the memory of the terminal.

It can be learned from the foregoing that, in the multimedia data generation method provided in this embodiment of this application, the terminal may generate, based on the layout setting operation of the user, the first layout information corresponding to the first multimedia data, and then when generating the derived area data corresponding to the first multimedia data, in other words, when generating the second multimedia data, retain the area data of the first area in the first multimedia data based on the first layout information, to obtain the second multimedia data including the area data of the first area, thereby generating the derived area data in a personalized manner. Compared with an existing multimedia technology, in the multimedia data generation method provided in this embodiment of this application, data derivation is not performed on all multimedia data by using a same template, but corresponding first layout information may be determined in a personalized manner based on a setting operation of a user and original multimedia data specified by the user, to accurately determine a first area that needs to be retained by the user, and generate derived area data that retains area data of the first area in the original multimedia data, thereby improving accuracy of generating the derived area data, and improving efficiency of generating the derived area data in batches.

### Embodiment 2:

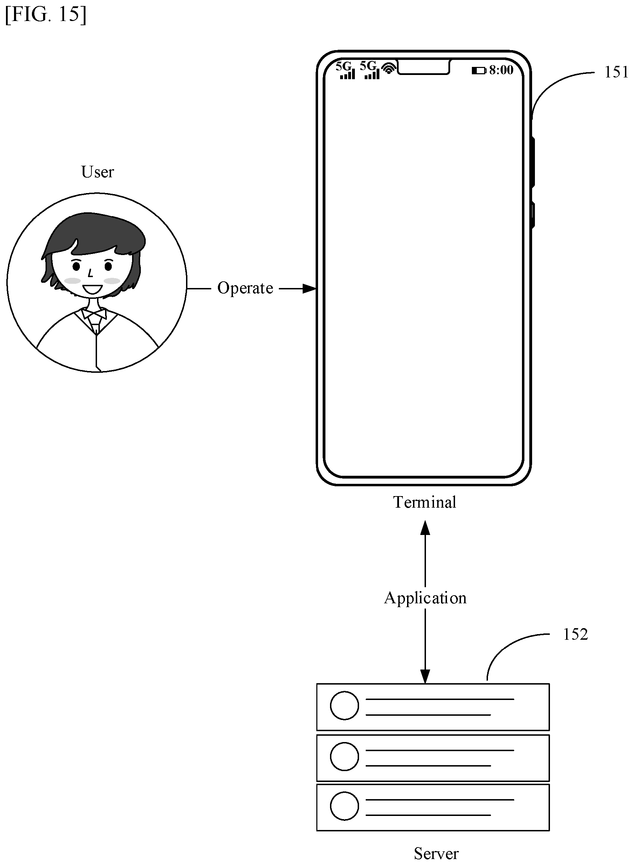

For example, FIG. 15 is a diagram of an application scenario of a multimedia data generation method according to another embodiment of this application. Refer to FIG. 15. In the application scenario, the multimedia data generation method is applied to a multimedia data generation system. The multimedia data generation system includes a terminal 151 and a server 152. The terminal 151 may be a terminal device such as a smartphone, a notebook computer, a tablet computer, or a desktop computer. An application used to generate derived multimedia data in batches may be installed in the terminal 151, a user may generate derived multimedia data in batches by using the application running in the terminal.

Different from Embodiment 1, in this embodiment, the application installed in the terminal 151 may delegate related operations of recognizing a layout of the original multimedia data and generating the derived multimedia data to the server 152 for completion, in other words, the application is used to generate a corresponding operation interface, so that the terminal 151 collects the original multimedia data imported by the user and a setting parameter, and uploads the foregoing collected data to the server 152, to reduce computing pressure of the terminal 151 when multimedia data is generated in batches.

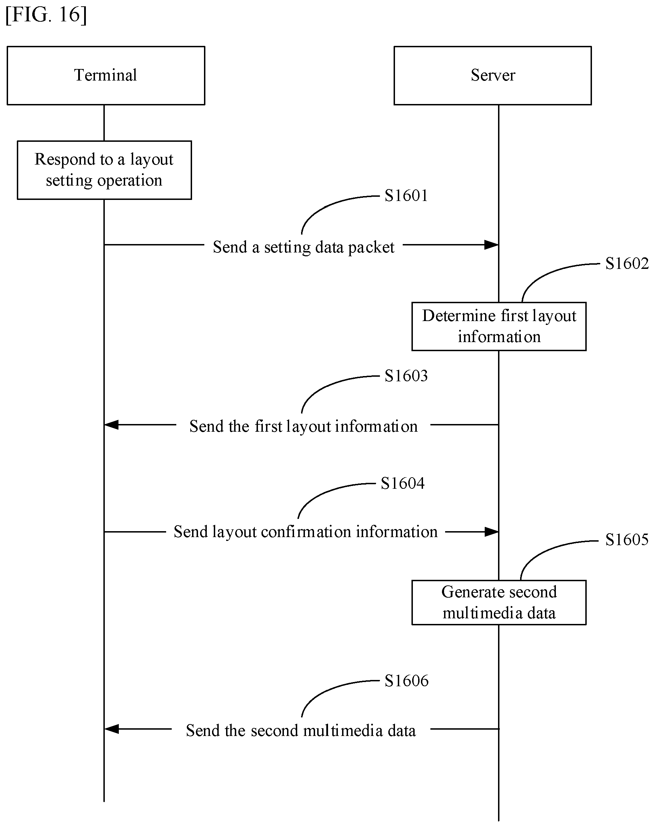

The following specifically describes an interaction process of the multimedia data generation method provided in this embodiment of this application. With reference to the application scenario in FIG. 15, FIG. 16 is an interaction flowchart of a multimedia data generation method according to an embodiment of this application. Refer to FIG. 16. The multimedia data generation method provided in this embodiment of this application specifically includes S1601 to S1606. A specific implementation process is described in detail as follows:

S1601: In response to a layout setting operation initiated by a user, a terminal sends a setting data packet to a server, where the setting data packet includes a setting parameter and first multimedia data.

In this embodiment, an application for generating derived multimedia data in batches is installed in the terminal. Original multimedia data (in other words, the first multimedia data) imported by the user may be obtained by using an operation interface generated by the application, and a corresponding setting parameter may be determined based on the layout setting operation initiated by the user. For a specific manner of obtaining the setting parameter, refer to the related descriptions of S501 and S502 in Embodiment 1. Details are not described herein again.

In this embodiment, after obtaining, by using the application, the original multimedia data imported by the user and the layout parameter, the terminal may encapsulate the foregoing two types of data to obtain the setting data packet, and send the setting data packet to the server.

S1602: The server determines, based on the setting data packet sent by the terminal, first layout information corresponding to the first multimedia data.

In this embodiment, after receiving the setting data packet sent by the terminal by using the application, the server may extract the setting parameter in the setting data packet, and determine the first layout information based on the setting parameter and the original multimedia data, where the first layout information includes a first area that needs to be retained. For a manner of determining the first layout information by the server, refer to the related descriptions of determining the first layout information by the terminal in S503. Details are not described herein again.

S1603: The terminal receives the first layout information fed back by the server.

In this embodiment, the server may send the determined first layout information to the terminal, so that the user determines, by using the terminal, whether the first area in the first layout information needs to be adjusted.

S1604: The terminal sends layout confirmation information about the first layout information to the server.

In this embodiment, if the user does not need to adjust the first layout information, the terminal may generate the layout confirmation information based on the first layout information, and send the layout confirmation information to the server.

In this embodiment, if the user needs to adjust the first area in the first layout information, the user may initiate a corresponding adjustment operation, and the terminal may obtain, based on the adjustment operation of the user, second layout information obtained by adjusting the first layout information. For a specific implementation of obtaining the second layout information, refer to the related operation of determining the second layout information in S501. Details are not described herein again. After obtaining the second layout information based on the adjustment operation of the user, the terminal may generate the layout confirmation information based on the second layout information, and send the layout confirmation information to the server.

S1605: The server generates, based on the layout confirmation information and the setting parameter, at least one piece of second multimedia data that includes the first area.

In this embodiment, after receiving the layout confirmation information sent by the terminal, the server may classify the original multimedia data based on the first layout information or the second layout information included in the layout confirmation information, and then generate the derived multimedia data of a corresponding quantity and size based on the setting parameter. For a specific implementation of generating the derived multimedia data, refer to the related descriptions in S502. Details are not described herein again.

S1606: The terminal receives the at least one piece of second multimedia data sent by the server.

In this embodiment, when generating the derived multimedia data corresponding to the original multimedia data, the server may send the derived multimedia data to the terminal by using the application, and the terminal may store the derived multimedia data in a local memory, or may select, based on an operation of the user, a part or all of the derived multimedia data to be stored in a local memory.

In this embodiment of this application, operations of confirming the layout of the original multimedia data and generating the derived data are delegated to the server for completion, so that computing pressure of the terminal can be reduced, and a size of an algorithm included in the application installed in the terminal can also be reduced. In addition, because the server can train a related algorithm (for example, a layout information recognition algorithm and a derived area data generation algorithm) by using big data, the server completes a task of generating the derived multimedia data and a task of recognizing the layout, so that accuracy of the derived multimedia data can be improved, to improve user experience.

### Embodiment 3:

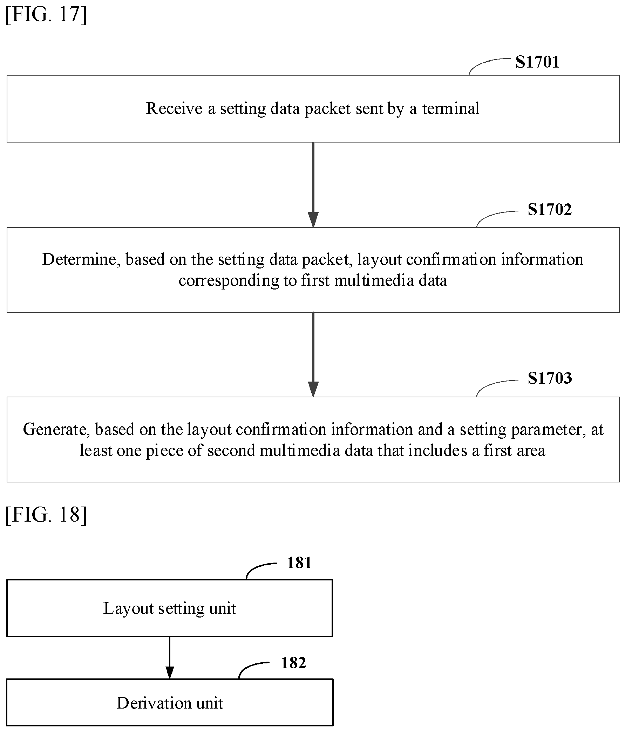

Compared with Embodiment 2, Embodiment 2 describes the multimedia data generation method provided in embodiments of this application from the perspective of dual-end interaction between a terminal and a server, and Embodiment 3 describes the multimedia data generation method provided in embodiments of this application from the perspective of the server. For example, FIG. 17 is an implementation flowchart of a multimedia data generation method on a server side according to an embodiment of this application. Specific descriptions are as follows:
S1701: Receive a setting data packet sent by a terminal, where the setting data packet includes first multimedia data and a setting parameter that is determined based on a layout setting operation of a user.
S1702: Determine, based on the setting data packet, layout confirmation information corresponding to the first multimedia data, where the layout confirmation information is used to determine a first area in the first multimedia data.
S1703: Generate, based on the layout confirmation information and the setting parameter, at least one piece of second multimedia data that includes the first area.

Optionally, the layout confirmation information includes first layout information;
the determining, based on the setting data packet, the layout confirmation information corresponding to the first multimedia data includes:
generating, based on the setting data packet, the first layout information corresponding to the first multimedia data; and
sending the first layout information to the terminal; and
the generating, based on the layout confirmation information and the setting parameter, the at least one piece of second multimedia data that includes the first area includes:
   in response to a confirmation instruction sent by the terminal, generating the at least one piece of second multimedia data based on the first layout information and the setting parameter.

Optionally, the layout confirmation information includes second layout information;
after the sending the first layout information to the terminal, the method further includes:
in response to an adjustment instruction sent by the terminal, performing layout adjustment on the first layout information based on the adjustment instruction, to obtain the second layout information; and
the generating, based on the layout confirmation information and the setting parameter, the at least one piece of second multimedia data that includes the first area includes:
   generating the at least one piece of second multimedia data based on the second layout information and the setting parameter.

Optionally, the layout confirmation information is further used to determine a second area in the first multimedia data, and the generating, based on the layout confirmation information and the setting parameter, the at least one piece of second multimedia data that includes the first area includes:
generating at least one piece of derived area data associated with the second area; and
generating the second multimedia data based on first area data of the first area and the derived area data.

Optionally, the setting parameter includes a derivation quantity N, and the generating the at least one piece of derived area data associated with the second area includes:
generating N pieces of derived area data associated with the second area; and
the generating the second multimedia data based on the first area data of the first area and the derived area data includes:
   generating N pieces of second multimedia data based on the N pieces of derived area data and the first area data.

Optionally, the setting parameter includes an association indicator, and the generating the at least one piece of derived area data associated with the second area includes:
performing semantic recognition on second area data of the second area, to obtain semantic description information of the second area; and
generating the at least one piece of derived area data based on the association indicator and the semantic description information.

Optionally, the setting parameter includes a target size, and the generating, based on the layout confirmation information and the setting parameter, the at least one piece of second multimedia data that includes the first area includes:
generating, based on the layout confirmation information, the at least one piece of second multimedia data that matches the target size.

Optionally, the setting parameter includes an industry type corresponding to the first multimedia data, and the determining, based on the setting data packet, the layout confirmation information corresponding to the first multimedia data includes:
determining, in the first multimedia data based on the industry type corresponding to the first multimedia data, at least one first area corresponding to the industry type; and
obtaining the layout confirmation information based on the at least one first area.

### Embodiment 4:

Corresponding to the related steps performed by the terminal in the multimedia data generation methods in Embodiment 1 and Embodiment 2, FIG. 18 is a block diagram of a structure of a multimedia data generation apparatus used for a terminal according to an embodiment of this application. For ease of description, only a part related to this embodiment of this application is shown.

Refer to FIG. 18. The multimedia data generation apparatus includes:
a layout setting unit 181, configured to generate, in response to a layout setting operation initiated by a user and based on a setting parameter corresponding to the layout setting operation, first layout information corresponding to first multimedia data specified by the user, where the first layout information is used to determine a first area in the first multimedia data; and
a derivation unit 182, configured to generate, based on the first layout information, at least one piece of second multimedia data that includes the first area.

Optionally, the derivation unit includes:
a derived area generation unit, configured to generate at least one piece of derived area data associated with the second area; and
a derived area merging unit, configured to generate the second multimedia data based on first area data of the first area and the derived area data.

Optionally, the setting parameter includes a derivation quantity N, and the derived area generation unit is specifically configured to generate N pieces of derived area data associated with the second area.

The derived area merging unit is specifically configured to generate N pieces of second multimedia data based on the N pieces of derived area data and the first area data.

Optionally, the setting parameter includes an association indicator, and the derived area generation unit includes:
a semantic description determining unit, configured to perform semantic recognition on second area data of the second area, to obtain semantic description information of the second area; and
a semantic derivation unit, configured to generate the at least one piece of derived area data based on the association indicator and the semantic description information.

Optionally, the setting parameter includes a target size, and the derivation unit includes:
a size adjustment unit, configured to generate, based on the first layout information, the at least one piece of second multimedia data that matches the target size.

Optionally, the layout setting unit includes:
an industry type determining unit, configured to determine, in the first multimedia data based on an industry type corresponding to the first multimedia data, at least one first area corresponding to the industry type; and
a first area generation unit, configured to generate the first layout information based on the at least one first area.

Optionally, the generation apparatus further includes:
an industry type setting unit, configured to: in response to the layout setting operation, determine the industry type corresponding to the first multimedia data.

Optionally, the generation apparatus further includes:
a layout adjustment unit, configured to: in response to an adjustment operation initiated by the user based on the first layout information, perform layout adjustment on the first layout information, to generate second layout information; and
a second layout generation unit, configured to generate, based on the second layout information, the at least one piece of second multimedia data that includes the first area.

Optionally, the layout setting unit includes:
a setting data packet sending unit, configured to: in response to the layout setting operation initiated by the user, send a setting data packet to a server, where the setting data packet includes the setting parameter and the first multimedia data; and
a first layout information receiving unit, configured to receive the first layout information fed back by the server.

Optionally, the derivation unit includes:
a layout confirmation information sending unit, configured to send layout confirmation information about the first layout information to a server, where the layout confirmation information includes the first layout information or the second layout information obtained by adjusting the first layout information; and
a second layout derivation unit, configured to receive the at least one piece of second multimedia data generated by the server based on the layout confirmation information and the setting parameter.

### Embodiment 5:

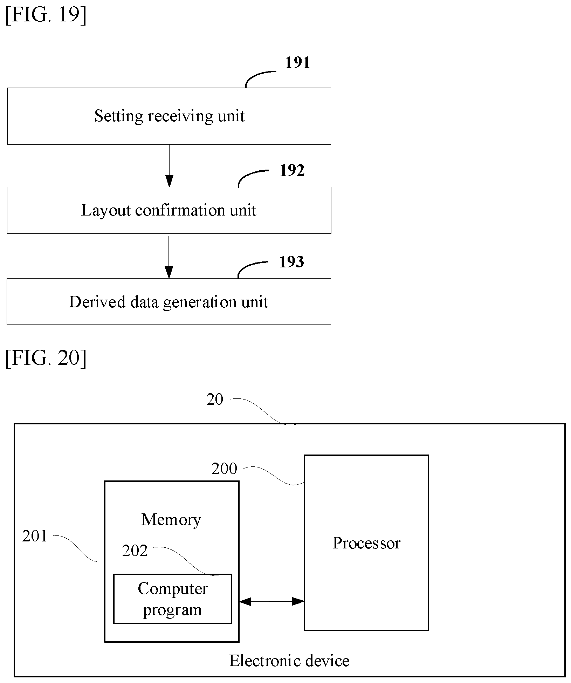

Corresponding to the related steps performed by the server in the multimedia data generation method in Embodiment 2, FIG. 19 is a block diagram of a structure of a multimedia data generation apparatus used for a server according to an embodiment of this application. For ease of description, only a part related to this embodiment of this application is shown.

Refer to FIG. 19. The multimedia data generation apparatus includes:
a setting receiving unit 191, configured to receive a setting data packet sent by a terminal, where the setting data packet includes first multimedia data and a setting parameter that is determined based on a layout setting operation of a user;
a layout confirmation unit 192, configured to determine, based on the setting data packet, layout confirmation information corresponding to the first multimedia data, where the layout confirmation information is used to determine a first area in the first multimedia data; and
a derived data generation unit 193, configured to generate, based on the layout confirmation information and the setting parameter, at least one piece of second multimedia data that includes the first area.

Optionally, the layout confirmation information includes first layout information;
the layout confirmation unit includes:
a first layout information determining unit, configured to generate, based on the setting data packet, the first layout information corresponding to the first multimedia data; and
a first layout information sending unit, configured to send the first layout information to the terminal; and
the derived data generation unit includes:
   a first derived data generation unit, configured to: in response to a confirmation instruction sent by the terminal, generate the at least one piece of second multimedia data based on the first layout information and the setting parameter.

Optionally, the layout confirmation information includes second layout information;
the generation apparatus further includes:
a second layout information determining unit, configured to: in response to an adjustment instruction sent by the terminal, perform layout adjustment on the first layout information based on the adjustment instruction, to obtain the second layout information; and
the derived data generation unit includes:
   a second derived data generation unit, configured to generate the at least one piece of second multimedia data based on the second layout information and the setting parameter.

Optionally, the layout confirmation information is further used to determine a second area in the first multimedia data, and the derived data generation unit includes:
a derived area data generation unit, configured to generate at least one piece of derived area data associated with the second area; and
a derived area merging unit, configured to generate the second multimedia data based on first area data of the first area and the derived area data.

Optionally, the setting parameter includes a derivation quantity N, and the derived area data generation unit is specifically configured to generate N pieces of derived area data associated with the second area.

The derived area merging unit is specifically configured to generate N pieces of second multimedia data based on the N pieces of derived area data and the first area data.

Optionally, the setting parameter includes an association indicator, and the derived area data generation unit includes:
a semantic description determining unit, configured to perform semantic recognition on second area data of the second area, to obtain semantic description information of the second area; and
a semantic description generation unit, configured to generate the at least one piece of derived area data based on the association indicator and the semantic description information.

Optionally, the setting parameter includes a target size, and the derived data generation unit includes:
a size adjustment unit, configured to generate, based on the layout confirmation information, the at least one piece of second multimedia data that matches the target size.

Optionally, the setting parameter includes an industry type corresponding to the first multimedia data, and the derived data generation unit includes:
an industry type determining unit, configured to determine, in the first multimedia data based on the industry type corresponding to the first multimedia data, at least one first area corresponding to the industry type; and
a layout confirmation information generation unit, configured to obtain the layout confirmation information based on the at least one first area.

FIG. 20 is a diagram of a structure of an electronic device according to an embodiment of this application. As shown in FIG. 20, the electronic device 20 in this embodiment includes: at least one processor 200 (FIG. 20 shows only one processor, and a quantity of processors may match a quantity of chips actually included in the electronic device in this embodiment), a memory 201, and a program 202 that is stored in the memory 201 and that is executable on the at least one processor 200. When executing the program 202, the processor 200 implements the steps in any one of the foregoing information sending method or information receiving method embodiments.

The electronic device 20 may be the foregoing server, terminal, or the like. The electronic device may include but is not limited to the processor 200 and the memory 201. Persons skilled in the art may understand that FIG. 20 is merely an example of the electronic device 20, and does not constitute a limitation on the electronic device 20. The electronic device may include more or fewer components than those shown in the figure, or may combine some components, or may have different components. For example, the electronic device may further include an input/output electronic device, a network access electronic device, or the like.

The processor 200 may be a central processing unit (Central Processing Unit, CPU). The processor 200 may alternatively be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, or a discrete hardware component. The general-purpose processor may be a microprocessor, or the processor may be any conventional processor or the like.

In some embodiments, the memory 201 may be an internal storage unit of the electronic device 20, for example, a hard disk or a memory of the electronic device 20. In some other embodiments, the memory 201 may alternatively be an external storage electronic device of the electronic device 20, for example, a plug-in hard disk, a smart media card (Smart Media Card, SMC), a secure digital (Secure Digital, SD) card, or a flash card (Flash Card) that is disposed on the electronic device 20. Further, the memory 201 may include both an internal storage unit and an external storage electronic device of the electronic device 20. The memory 201 is configured to store an operating system, an application, a boot loader (Boot Loader), data, another program, and the like, for example, program code of the program. The memory 201 may be further configured to temporarily store data that has been output or is to be output.

It should be noted that, content such as information exchange and execution processes between the foregoing apparatuses/units are based on a same concept as those in the method embodiments of this application. For specific functions and brought technical effects of the foregoing apparatuses/units, refer to the method embodiments. Details are not described herein again.

Persons skilled in the art may clearly understand that, for the purpose of convenient and brief description, division into the foregoing functional units and modules is merely used as an example for description. In an actual application, the foregoing functions may be allocated to different functional units and modules for implementation based on a requirement. In other words, an inner structure of the apparatus is divided into different functional units or modules, to implement all or some of the functions described above. Functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units or modules in the foregoing system, refer to a corresponding process in the method embodiments. Details are not described herein again.

An embodiment of this application further provides an electronic device. The electronic device includes: at least one processor, a memory, and a computer program that is stored in the memory and that is executable on the at least one processor. When executing the computer program, the processor implements the steps in any one of the foregoing method embodiments.

An embodiment of this application further provides a readable storage medium. The readable storage medium stores a program. When the program is executed by a processor, the steps in the foregoing method embodiments may be implemented.

An embodiment of this application provides a program product. When the program product runs on an electronic device, the electronic device is enabled to implement the steps in the foregoing method embodiments when executing the computer program product.

When the integrated unit is implemented in the form of the software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code. The computer program code may be in a source code form, an object code form, an executable file form, some intermediate forms, or the like. The computer-readable medium may include at least any entity or apparatus that can carry the computer program code to a photographing apparatus/electronic device, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disc. In some jurisdictions, the computer-readable medium cannot be an electrical carrier signal or a telecommunication signal according to legislation and patent practices.

In the foregoing embodiments, descriptions of all embodiments have respective focuses. For a part that is not described in detail in an embodiment, refer to related descriptions in another embodiment.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. A multimedia data generation method, applied to a terminal, wherein the multimedia data generation method comprises:
generating, in response to a layout setting operation initiated by a user and based on a setting parameter corresponding to the layout setting operation, first layout information corresponding to first multimedia data specified by the user, wherein the first layout information is used to determine a first area in the first multimedia data; and
generating, based on the first layout information, at least one piece of second multimedia data that comprises the first area.

2. The generation method according to claim 1, wherein the first layout information is further used to determine a second area in the first multimedia data, and the generating, based on the first layout information, the at least one piece of second multimedia data that comprises the first area comprises:
generating at least one piece of derived area data associated with the second area; and
generating the second multimedia data based on first area data of the first area and the derived area data.

3. The generation method according to claim 2, wherein the setting parameter comprises a derivation quantity N, and the generating the at least one piece of derived area data associated with the second area comprises:
generating N pieces of derived area data associated with the second area; and
the generating the second multimedia data based on the first area data of the first area and the derived area data comprises:
generating N pieces of second multimedia data based on the N pieces of derived area data and the first area data.

4. The generation method according to claim 2, wherein the setting parameter comprises an association indicator, and the generating the at least one piece of derived area data associated with the second area comprises:
performing semantic recognition on second area data of the second area, to obtain semantic description information of the second area; and
generating the at least one piece of derived area data based on the association indicator and the semantic description information.

5. The generation method according to any one of claims 1 to 4, wherein the setting parameter comprises a target size, and the generating, based on the first layout information, the at least one piece of second multimedia data that comprises the first area comprises:
generating, based on the first layout information, the at least one piece of second multimedia data that matches the target size.

6. The generation method according to any one of claims 1 to 5, wherein the generating, in response to the layout setting operation initiated by the user and based on the setting parameter corresponding to the layout setting operation, the first layout information corresponding to the first multimedia data specified by the user comprises:
determining, in the first multimedia data based on an industry type corresponding to the first multimedia data, at least one first area corresponding to the industry type; and
generating the first layout information based on the at least one first area.

7. The generation method according to claim 6, wherein before the determining, in the first multimedia data based on the industry type corresponding to the first multimedia data, the at least one first area corresponding to the industry type, the method comprises:
in response to the layout setting operation, determining the industry type corresponding to the first multimedia data.

8. The generation method according to any one of claims 1 to 7, wherein after the generating, in response to the layout setting operation initiated by the user and based on the setting parameter corresponding to the layout setting operation, the first layout information corresponding to the first multimedia data specified by the user, the method further comprises:
in response to an adjustment operation initiated by the user based on the first layout information, performing layout adjustment on the first layout information, to generate second layout information; and
generating, based on the second layout information, the at least one piece of second multimedia data that comprises the first area.

9. The generation method according to any one of claims 1 to 8, wherein the generating, in response to the layout setting operation initiated by the user and based on the setting parameter corresponding to the layout setting operation, the first layout information corresponding to the first multimedia data specified by the user comprises:
in response to the layout setting operation initiated by the user, sending a setting data packet to a server, wherein the setting data packet comprises the setting parameter and the first multimedia data; and
receiving the first layout information fed back by the server.

10. The generation method according to claim 8, wherein the generating, based on the first layout information, the at least one piece of second multimedia data that comprises the first area comprises:
sending layout confirmation information about the first layout information to the server, wherein the layout confirmation information comprises the first layout information or the second layout information obtained by adjusting the first layout information; and
receiving the at least one piece of second multimedia data generated by the server based on the layout confirmation information and the setting parameter.

11. A multimedia data generation method, applied to a server, wherein the multimedia data generation method comprises:
receiving a setting data packet sent by a terminal, wherein the setting data packet comprises first multimedia data and a setting parameter that is determined based on a layout setting operation of a user;
determining, based on the setting data packet, layout confirmation information corresponding to the first multimedia data, wherein the layout confirmation information is used to determine a first area in the first multimedia data; and
generating, based on the layout confirmation information and the setting parameter, at least one piece of second multimedia data that comprises the first area.

12. The generation method according to claim 11, wherein the layout confirmation information comprises first layout information;
the determining, based on the setting data packet, the layout confirmation information corresponding to the first multimedia data comprises:
generating, based on the setting data packet, the first layout information corresponding to the first multimedia data; and
sending the first layout information to the terminal; and
the generating, based on the layout confirmation information and the setting parameter, the at least one piece of second multimedia data that comprises the first area comprises:
in response to a confirmation instruction sent by the terminal, generating the at least one piece of second multimedia data based on the first layout information and the setting parameter.

13. The generation method according to claim 12, wherein the layout confirmation information comprises second layout information;
after the sending the first layout information to the terminal, the method further comprises:
in response to an adjustment instruction sent by the terminal, performing layout adjustment on the first layout information based on the adjustment instruction, to obtain the second layout information; and
the generating, based on the layout confirmation information and the setting parameter, the at least one piece of second multimedia data that comprises the first area comprises:
generating the at least one piece of second multimedia data based on the second layout information and the setting parameter.

14. The generation method according to claim 11, wherein the layout confirmation information is further used to determine a second area in the first multimedia data, and the generating, based on the layout confirmation information and the setting parameter, the at least one piece of second multimedia data that comprises the first area comprises:
generating at least one piece of derived area data associated with the second area; and
generating the second multimedia data based on first area data of the first area and the derived area data.

15. The generation method according to claim 14, wherein the setting parameter comprises a derivation quantity N, and the generating the at least one piece of derived area data associated with the second area comprises:
generating N pieces of derived area data associated with the second area; and
the generating the second multimedia data based on the first area data of the first area and the derived area data comprises:
generating N pieces of second multimedia data based on the N pieces of derived area data and the first area data.

16. The generation method according to claim 14, wherein the setting parameter comprises an association indicator, and the generating the at least one piece of derived area data associated with the second area comprises:
performing semantic recognition on second area data of the second area, to obtain semantic description information of the second area; and
generating the at least one piece of derived area data based on the association indicator and the semantic description information.

17. The generation method according to any one of claims 11 to 16, wherein the setting parameter comprises a target size, and the generating, based on the layout confirmation information and the setting parameter, the at least one piece of second multimedia data that comprises the first area comprises:
generating, based on the layout confirmation information, the at least one piece of second multimedia data that matches the target size.

18. The generation method according to any one of claims 11 to 17, wherein the setting parameter comprises an industry type corresponding to the first multimedia data, and the determining, based on the setting data packet, the layout confirmation information corresponding to the first multimedia data comprises:
determining, in the first multimedia data based on the industry type corresponding to the first multimedia data, at least one first area corresponding to the industry type; and
obtaining the layout confirmation information based on the at least one first area.

19. An electronic device, wherein the electronic device comprises a memory, a processor, and a computer program that is stored in the memory and that is executable on the processor, and when executing the computer program, the processor implements the steps of the method according to any one of claims 1 to 10 or the steps of the method according to any one of claims 11 to 18.

20. A computer-readable storage medium, wherein the computer-readable storage medium stores a computer program, and when the computer program is executed by a processor, the steps of the method according to any one of claims 1 to 10 or the steps of the method according to any one of claims 11 to 18 are implemented.
